(19) Europäisches Patentamt
European Patent Office
Office européen des brevets

(11) **EP 4 746 484 A1**

(12) **EUROPEAN PATENT APPLICATION**
published in accordance with Art. 153(4) EPC

(43) Date of publication:
**20.05.2026 Bulletin 2026/21**

(21) Application number: **23945095.0**

(22) Date of filing: **11.07.2023**

(51) International Patent Classification (IPC):
*H04W 16/28* (2009.01)    *H04W 24/02* (2009.01)

(52) Cooperative Patent Classification (CPC):
**H04W 16/28; H04W 24/02**

(86) International application number:
**PCT/JP2023/025636**

(87) International publication number:
**WO 2025/013218 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **ECHIGO, Haruhi**
**Tokyo 100-6150 (JP)**

• **HARADA, Hiroki**
**Tokyo 100-6150 (JP)**
• **NAGATA, Satoshi**
**Tokyo 100-6150 (JP)**
• **XU, Jialong**
**Beijing 100190 (CN)**
• **LIU, Liu**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes a control section that, when performance monitoring of an Artificial Intelligence (AI)/-Machine Learning (ML) model is performed based on a certain number of higher ranked beams predicted by the AI/ML model, determines the certain number, and a transmitting section that transmits the certain number. According to one aspect of the present disclosure, it is possible to appropriately implement performance monitoring of an AI/ML model.

## FIG. 11A

# FIG. 11B

① UE report 'K' and/orTop-K beam indexes

② K beam measurements indication

③ K beam measurements

AI Model — predicted beams

real values of Top-K predicted beams

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication technologies, it is studied to utilize the artificial intelligence (AI) technology, such as machine learning (ML), for control, management, and the like of networks/devices.

Incidentally, performance monitoring of an AI/ML model is under study. The performance monitoring of the AI model may be performed in a terminal (user terminal, User Equipment (UE)) or may be performed in a NW (for example, a base station (BS)). Meanwhile, studies have not yet advanced a specific method of implementing performance monitoring of an AI/ML model used for (Channel State Information (CSI)) prediction/beam prediction.

Unless the method of implementing the performance monitoring is appropriately defined, appropriate overhead reduction/highly accurate channel estimation/highly efficient resource use cannot be achieved, which may suppress improvement of communication throughput/communication quality.

Thus, an object of the present disclosure is to provide a terminal, a radio communication method, and a base station that can appropriately implement performance monitoring of an AI/ML model.

Solution to Problem

A terminal according to one aspect of the present disclosure includes a control section that, when performance monitoring of an Artificial Intelligence (AI)/Machine Learning (ML) model is performed based on a certain number of higher ranked beams predicted by the AI/ML model, determines the certain number, and a transmitting section that transmits the certain number. Advantageous Effects of Invention

According to one aspect of the present disclosure, it is possible to appropriately implement performance monitoring of an AI/ML model.

Brief Description of Drawings

[FIG. 1] FIG. 1 is a diagram to show an example of an AI model management framework.
[FIG. 2] FIG. 2 is a diagram to show an example of CSI feedback using an encoder/decoder.
[FIG. 3] FIG. 3 is a diagram to show an example of a life cycle management framework for performance monitoring at a UE according to one embodiment.

[FIG. 4] FIG. 4 is a diagram to show an example of a life cycle management framework for performance monitoring at a BS according to one embodiment.

[FIG. 5] FIG. 5A and FIG. 5B are diagrams to show examples of AI-based beam reporting.

[FIG. 6] FIG. 6 is a diagram to show an example of a prediction time offset.

[FIG. 7] FIG. 7 is a diagram to show an example of performance monitoring.

[FIG. 8] FIG. 8 is a diagram to show an example of accuracy with top-K/1 (%) in set A prediction.

[FIG. 9] FIG. 9 is a diagram to show an example of top-K/1 (%) for each scenario.

[FIG. 10] FIG. 10A and FIG. 10B are diagrams to show examples of Embodiment 2-3.

[FIG. 11] FIG. 11A and FIG. 11B are diagrams to show examples of Embodiment 2-4.

[FIG. 12] FIG. 12 is a diagram to show an example of an outline of NW monitoring of Embodiments 2-5 and 2-6.

[FIG. 13] FIG. 13 is a diagram to show an example of AI performance monitoring at a NW.

[FIG. 14] FIG. 14 is a diagram to show an example of performance monitoring at a UE.

[FIG. 15] FIG. 15 is a diagram to show an example of a schematic structure of a radio communication system according to one embodiment.

[FIG. 16] FIG. 16 is a diagram to show an example of a structure of a base station according to one embodiment.

[FIG. 17] FIG. 17 is a diagram to show an example of a structure of a user terminal according to one embodiment.

[FIG. 18] FIG. 18 is a diagram to show an example of a hardware structure of the base station and the user terminal according to one embodiment.

[FIG. 19] FIG. 19 is a diagram to show an example of a vehicle according to one embodiment.

Description of Embodiments

(Channel State Information (CSI) Measurement/Reporting)

CSI measurement/reporting in an existing NR specification (for example, Rel-15 NR to Rel-17 NR) will be described. A UE generates (also referred to as determines, calculates, estimates, measures, and the like) CSI, based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

In the present disclosure, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), information related to a channel matrix (or channel coefficient), information related to a precoding matrix (or precoding coefficient), information related to a beam/Transmission Configuration Indication state (TCI state)/spatial relation, and the like.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

In the present disclosure, the RS, a CSI-RS, a non-zero power (NZP) CSI-RS, a zero power (ZP) CSI-RS, CSI interference measurement (CSI-IM), a CSI-SSB, and an SSB may be interchangeably interpreted. The CSI-RS may include another reference signal.

The UE may receive configuration information related to a CSI report (which may be referred to as CSI report configuration, report setting, and the like), and may control, based on the configuration information, CSI reporting. The report configuration information may be, for example, a radio resource control (RRC) information element (IE) "CSI-ReportConfig."

The CSI report configuration may include at least one of information below:

- Information (resource configuration ID, for example, "CSI-ResourceConfigId") related to a CSI resource used for CSI measurement
- Information (report quantity information, for example, "reportQuantity") related to one or more quantities (CSI parameters) of the CSI to be reported
- Report type information (for example, "reportConfigType") indicating behavior of the time domain for report configuration

In the present disclosure, a CSI resource may be interpreted as a time instance, a CSI-RS occasion/CSI-IM occasion/SSB occasion, (one/plurality of) occasions of a CSI-RS resource, a CSI occasion, an occasion, a CSI-RS resource/CSI-IM resource/SSB resource, a time resource, a frequency resource, an antenna port (for example, a CSI-RS port), or the like, and vice versa. A time unit of the CSI resource may be a slot, a symbol, or the like.

Information related to the CSI resource above may include information related to a CSI resource for channel measurement, information related to a CSI resource (NZP-CSI-RS resource) for interference measurement, information related to a CSI-IM resource for interference measurement, and the like.

The report quantity information may indicate any one or combinations of the above CSI parameters (for example, CRI, RI, PMI, CQI, LI, L1-RSRP, and the like).

The report type information may indicate a periodic CSI (P-CSI) report, an aperiodic CSI (A-CSI) report, or a semi-persistent (semi-permanent) CSI (SP-CSI) report.

The UE performs CSI-RS/SSB/CSI-IM measurement, based on CSI resource configuration (CSI resource configuration associated with CSI-ResourceConfigId) corresponding to CSI report configuration, and derives, based on the measurement result, CSI to be reported.

The CSI resource configuration (for example, CSI-ResourceConfig information element) may include a csi-RS-ResourceSetList field indicating a more specific CSI-RS/SSB resource, resource type information (for example, "resourceType") indicating behavior of the time domain for resource configuration, and the like.

The resource type information may indicate a P-CSI resource, an A-CSI resource, or an SP-CSI resource.

(Application of Artificial Intelligence (AI) technology to Radio Communication)

For future radio communication technologies, it is studied to utilize the AI technology, such as machine learning (ML), for control, management, and the like of networks/devices.

For example, it is studied that a terminal (user terminal, User Equipment (UE))/base station (BS) utilizes the AI technology for improvement in channel state information (CSI) feedback (for example, overhead reduction, accuracy enhancement, prediction), enhancement in beam management (for example, accuracy enhancement, prediction in time/spatial domain), enhancement in location measurement (for example, location estimation/prediction enhancement), and the like.

The AI model may output, based on the input information, at least one piece of information among an estimated value, a predicted value, a selected operation, classification, and the like. The UE/BS may input channel state information, a reference signal measurement value, and the like to the AI model and output highly accurate channel state information/measured value/beam selection/location, future channel state information/radio link quality, and the like.

Note that, in the present disclosure, AI may be interpreted as an object (also referred to as a target, data, function, program, and the like) having (implementing) at least one of the following features:

- estimation based on observed or collected information,
- selection based on observed or collected information, and
- prediction based on observed or collected information.

In the present disclosure, estimation, prediction, and inference may be interchangeably interpreted. In the present disclosure, "estimate," "predict," and "infer" may be interchangeably interpreted.

In the present disclosure, the object may be, for example, an apparatus, a device, or the like, such as a UE or a BS. In the present disclosure, the object may correspond to a program/model/entity operating in the apparatus.

Note that, in the present disclosure, the AI model may be interpreted as an object having (implementing) at least one of the following features:

- feeding information to thereby generate an estimated value,
- feeding information to thereby predict an estimated value,
- feeding information to thereby find a feature, and
- feeding information to thereby select an operation.

In the present disclosure, the AI model may mean a data-driven algorithm that applies AI technology and generates a set of outputs based on a set of inputs.

In the present disclosure, an AI model, a model, an ML model, predictive analytics, a predictive analytics model, a tool, an autoencoder, an encoder, a decoder, a neural network model, an AI algorithm, a scheme, and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, the autoencoder may be interpreted as any autoencoder such as a stacked autoencoder and a convolutional autoencoder, and vice versa. The encoder/decoder of the present disclosure may adopt a model of Residual Network (ResNet), DenseNet, RefineNet, or the like.

In the present disclosure, an encoder, encoding, encode/encoded, modification/change/control by an encoder, compressing, compress/compressed, generating, generate/generated, and the like may be interchangeably interpreted.

In the present disclosure, a decoder, decoding, decode/decoded, modification/change/control by a decoder, decompressing, decompress/decompressed, reconstructing, reconstruct/reconstructed, and the like may be interchangeably interpreted.

In the present disclosure, a layer (for an AI model) may be interpreted as a layer (input layer, intermediate layer, or the like) used in an AI model, and vice versa. The layer of the present disclosure may correspond to at least one of an input layer, an intermediated layer, an output layer, a batch normalization layer, a convolutional layer, an activation layer, a dense layer, a normalization layer, a pooling layer, an attention layer, a dropout layer, a fully-connected layer, and the like.

In the present disclosure, examples of an AI model training method may include supervised learning, unsupervised learning, reinforcement learning, federated learning, and the like. The supervised learning may mean processing of training a model, based on an input and a corresponding label. The unsupervised learning may mean processing of training a model without labeled data. The reinforcement learning may mean processing of training a model, based on an input (that is, a state) and a feedback signal (that is, a reward) generated from a model output (that is, an action), in an environment in which models interact with each other.

In the present disclosure, generation, computation, derivation, and the like may be interchangeably interpreted. In the present disclosure, "perform," "manage," "operate," "carry out," and the like may be interchangeably interpreted. In the present disclosure, training, learning, update, retraining, and the like may be interchangeably interpreted. In the present disclosure, inference, after-training, substantial use, actual use, and the like may be interchangeably interpreted. In the present disclosure, a signal may be interpreted as a signal/channel, and vice versa.

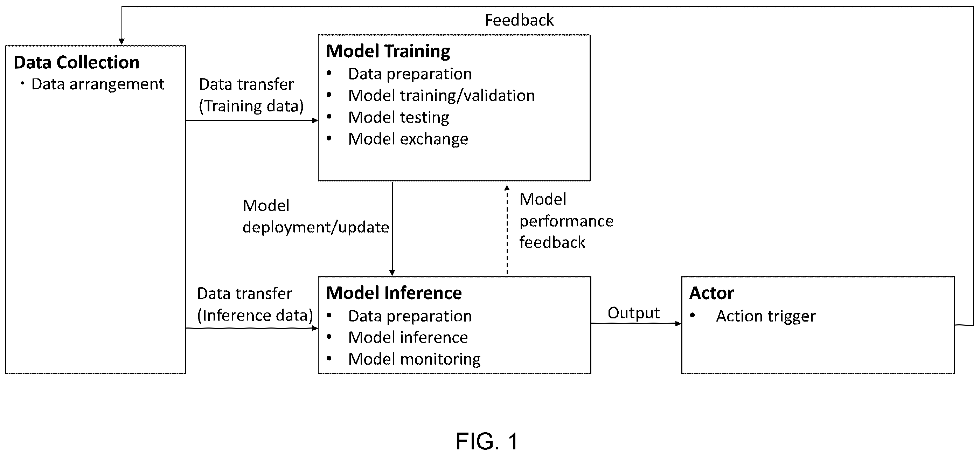

FIG. 1 is a diagram to show an example of an AI model management framework. In the present example, stages related to an AI model are shown using blocks. The present example is also expressed as AI model life cycle management.

A data collection stage corresponds to a stage to collect data for generating/updating the AI model. The data collection stage may include data arrangement (for example, determining which data is transferred for model training /model inference), data transfer (for example, transferring data to an entity (for example, UE, gNB) performing model training/model inference), and the like.

Note that data collection may mean processing in which a network node, a management entity, or a UE collects data for the purpose of AI model training/data analysis/inference. In the present disclosure, processing and a procedure may be interchangeably interpreted.

In a model training stage, the model training is performed based on data (training data) transferred from the collection stage. This stage may include data preparation (for example, performing preprocessing, cleaning, formatting, conversion, and the like of data), model training/validation, model testing (for example, checking whether a trained model meets a performance threshold value), model exchange (for example, transferring a model for distributed learning), model deployment/update (deploying/updating a model for an entity performing model inference), and the like.

Note that AI model training may mean processing for training an AI model with a data-driven method and acquiring a trained AI model for inference.

AI model validation may mean sub-processing of training for evaluating quality of an AI model by using a data set different from the data set used for model training. The sub-processing is useful for selection of model parameters generalized beyond the data set used for model training.

AI model testing may mean sub-processing of training for evaluating performance of a final AI model by using a data set different from the data set used for model training/validation. Note that testing may not presuppose subsequent model tuning, unlike validation.

In a model inference stage, model inference is performed based on the data (inference data) transferred from the collection stage. This stage may include data preparation (for example, performing preprocessing, cleaning, formatting, conversion, and the like of data), model inference, model monitoring (for example, monitoring of performance of model inference), model performance feedback (feeding back model performance to an entity performing model training), output (providing a model output to an actor), and the like.

Note that AI model inference may mean processing for producing a set of outputs from a set of inputs by using a trained AI model.

A UE side model may mean an AI model whose inference is entirely performed in the UE. A network side model may mean an AI model whose inference is entirely performed in the network (for example, the gNB).

A one-sided model may mean the UE side model or the network side model. A two-sided model may mean a pair of AI models that perform joint inference. Here, joint inference may include AI inference whose inference is jointly performed by the UE and the network, and for example, a first part of the inference may be first performed by the UE and the remaining part may be performed by the gNB (or vice versa).

AI model monitoring may mean processing for monitoring inference performance of an AI model, and may be interpreted as model performance monitoring, performance monitoring, or the like, and vice versa.

Note that model registration may mean assigning a version identifier to a model and making the model executable by compiling it into specific hardware used in the inference stage. Model deployment may mean delivering a runtime image (or an image of an execution environment) of a fully developed and tested model to a target (for example, the UE/gNB) in which inference is performed (or enabling the runtime image in the target).

An actor stage may include an action trigger (for example, determining whether to trigger action to another entity), feedback (for example, feeding back information required for training data/inference data /performance feedback), and the like.

Note that, for example, training of a model for mobility optimization may be performed in, for example, maintenance, operation, and administration in a network (NW) (Operation, Administration and Maintenance (Management) (OAM))/gNodeB (gNB). In the former case, interoperation, large amounts of storage, operator manageability, and model flexibility (such as feature engineering) are advantageous. In the latter case, model update latency, data exchange for model deployment, and the like are advantageously not required. The inference of the model above may be performed in the gNB, for example.

The entity performing training/inference may differ depending on a use case (that is, a function of the AI model). The function of the AI model may include beam management, beam prediction, an autoencoder (or information compression), CSI feedback, positioning, and the like.

For example, for AI-aided beam management based on a measurement report, the OAM/gNB may perform the model training, and the gNB may perform the model inference.

For AI-aided UE-assisted positioning, a Location Management Function (LMF) may perform the model training, and the LMF may perform the model inference.

For CSI feedback/channel estimation using an autoencoder, the OAM/gNB/UE may perform the model training, and the gNB/UE may perform the model inference (jointly).

For AI-aided beam management or AI-aided UE-based positioning based on beam measurements, the OAM/gNB/UE may perform the model training, and the UE may perform the model inference.

Note that model activation may mean activating an AI model for a specific function. Model deactivation may mean deactivating an AI model for a specific function. Model switching may mean deactivating a currently active AI model for a specific function and activating a different AI model.

Model transfer may mean delivering an AI model on an air interface. The delivering may include delivering one or both of parameters of a model structure known to a receiving side and a new model having parameters. The delivering may include a full model or a partial model. Model download may mean model transfer from the network to the UE. Model upload may mean model transfer from the UE to the network.

(AI-Based CSI Feedback)

As a use case for utilization of an AI model, CSI compression using a two-sided AI model is under study. Such a CSI compression method may be referred to as AI-based CSI feedback, and may be implemented, for example, by using an autoencoder.

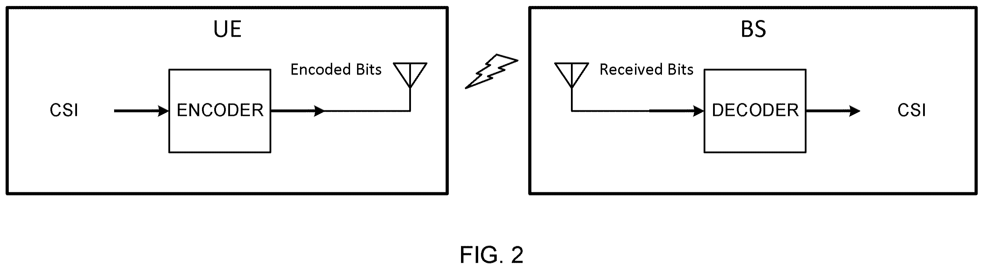

FIG. 2 is a diagram to show an example of CSI feedback using an encoder/decoder. The UE transmits, from an antenna, information (CSI feedback information) including an encoded bit output by inputting CSI to an encoder. The BS inputs the bit of the received CSI feedback information to a corresponding decoder to obtain output CSI.

The input CSI may include, for example, information on a channel coefficient (element of a channel matrix) or information on a precoding coefficient (element of a precoding matrix). In other words, the CSI may correspond to information related to a channel state in a spatial-frequency domain. Note that the input may include information other than the CSI.

Note that the CSI output from the decoder may be reconstructed CSI corresponding to the input to the encoder or may be CSI different from the input to the encoder (for example, precoding coefficient information or the like, if the input information is channel coefficient information).

Note that the encoder/decoder may include pre-processing for the input, post-processing for the output, and the like.

The encoded bit is compressed more than the input information before the encoding, and communication overhead for CSI feedback can be expected to be reduced.

(Life Cycle Management Framework for Performance Monitoring)

Regarding the AI-based CSI feedback, steps in a life cycle management framework for performance monitoring at the UE/BS will be described below.

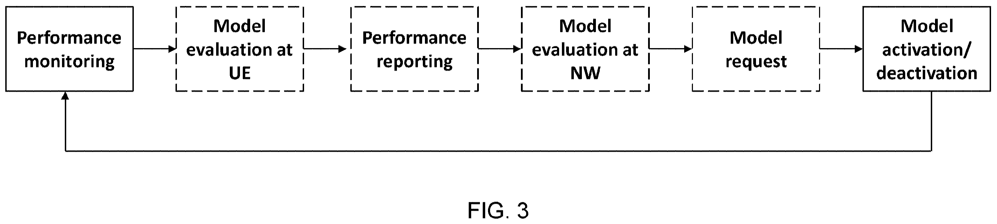

FIG. 3 is a diagram to show an example of the life cycle management framework for the performance monitoring at the UE according to one embodiment.

In a step of performance monitoring, the UE monitors a performance of a model and a fallback scheme (non-AI-based CSI feedback).

In a step of model evaluation at the UE, the UE evaluates a performance of the monitored/reported model and fallback scheme (non-AI-based CSI feedback).

In a step of performance reporting, the UE reports the monitored performance above to a NW.

In a step of model evaluation at the NW, the NW evaluates a performance of the reported model and fallback scheme.

In a step of model request, the UE transmits, to the NW, a request related to which model is to be applied or whether the fallback scheme is to be applied.

In a step of model activation/deactivation, the UE may be indicated with which scheme (model) is to be activated. The UE may activate a certain model or fallback scheme.

Note that some of the illustrated steps (for example, steps represented by broken lines) may be performed as needed.

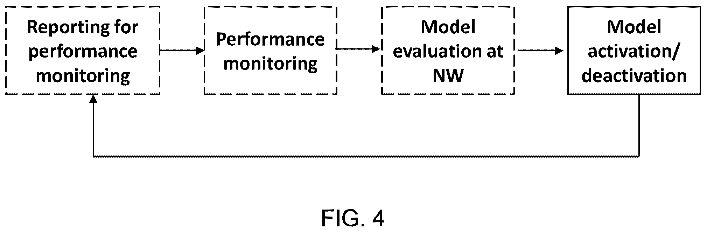

FIG. 4 is a diagram to show an example of the life cycle management framework for the performance monitoring at the BS according to one embodiment.

In a step of reporting for performance monitoring, the UE reports information for performance monitoring at the NW (BS).

In a step of performance monitoring at the NW, the NW monitors a performance of a model and a fallback scheme (non-AI-based CSI feedback).

In a step of model evaluation at the NW, the NW evaluates a performance of the model and fallback scheme.

In a step of model activation/deactivation, the UE may be indicated with which scheme (model) is to be activated. The UE may activate a certain model or fallback scheme.

Note that some of the illustrated steps (for example, steps represented by broken lines) may be performed as needed.

In embodiments to be described below, details of the steps shown in FIG. 3 and FIG. 4 will be described.

(AI-Based Beam Reporting)

As a use case for utilization of an AI model, spatial domain downlink (DL) beam prediction or temporal DL beam prediction using a one-sided AI model in a UE or a NW is under study. Such beam prediction method may be referred to as AI-based beam prediction (beam reporting), AI-based beam management (BM), and so on.

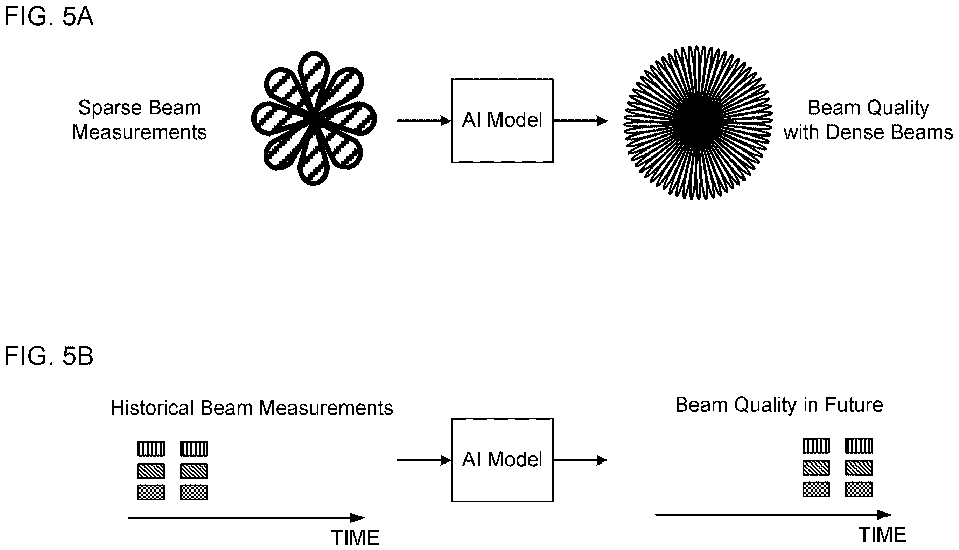

FIG. 5A and FIG. 5B are diagrams to show examples of the AI-based beam reporting. FIG. 5A shows the spatial domain DL beam prediction. The UE may measure spatially sparse (or thick) beams, may input a result of the measurement and the like to the AI model, and may output a prediction result of beam quality of spatially dense (or thin) beams.

FIG. 5B shows the temporal DL beam prediction. The UE may measure temporal beams, may input a result of the measurement and the like to the AI model, and may output a prediction result of beam quality of future beams.

Note that the spatial domain DL beam prediction and the temporal DL beam prediction may be referred to as BM case 1 and BM case 2, respectively. The temporal DL beam prediction may also be referred to as, for example, time domain CSI prediction and so on.

Beams/RSs associated with an output (prediction result) from the AI model may be referred to as set A. Beams/RSs associated with an input to the AI model may be referred to as set B.

Examples of candidate inputs to the AI model in BM case 1/2 include an L1-RSRP (Layer 1 Reference Signal Received Power), assistance information (for example, beam shape information, UE location/direction information, transmit beam usage information), channel impulse response (CIR) information, a corresponding DL transmit/receive beam ID, and the like.

Examples of candidate outputs from the AI model in BM case 1 include IDs of the top-K (where K is an integer) transmit/receive beams, predicted L1-RSRPs of these beams, the probability of each beam being in the top-K beams, the angles of these beams, and the like.

Examples of candidate outputs from the AI model in BM case 2 include predicted beam failure in addition to the candidate outputs from the AI model in BM case 1.

(Analysis)

Incidentally, performance monitoring of an AI/ML model may be performed in a UE or a NW. Meanwhile, studies have not yet advanced a specific method of implementing performance monitoring of an AI/ML model used for CSI prediction/beam prediction.

Unless the method of implementing the performance monitoring is appropriately defined, appropriate overhead reduction/highly accurate channel estimation/highly efficient resource use cannot be achieved, which may suppress improvement of communication throughput/communication quality.

Thus, the inventors of the present invention came up with the idea of a method for appropriately implementing performance monitoring of an AI/ML model.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a measured/reported RS may mean an RS measured/reported for a CSI report.

In the present disclosure, a timing, a time point, a time, a slot, a sub-slot, a symbol, a subframe, and the like may be interchangeably interpreted.

In the present disclosure, the RS may be a CSI-RS, an SS/PBCH block (SS block (SSB)), or the like, for example. An RS index may be a CSI-RS resource indicator (CRI), an SS/PBCH block resource indicator (SSBRI), or the like.

In the present disclosure, the channel measurement/estimation and the CSI measurement/beam measurement may be performed by using at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a reference signal for measurement (Sounding Reference Signal (SRS)), and the like, for example.

In the present disclosure, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), information related to a channel matrix (or channel coefficient), information related to a precoding matrix (or precoding coefficient), and the like. Measurement/prediction in the present disclosure may be measurement/prediction of these pieces of information/values included in the CSI.

In the present disclosure, UCI, a CSI report, CSI feedback, feedback information, a feedback bit, a CSI feedback method, a CSI feedback scheme, and the like may be interchangeably interpreted. In the present disclosure, a bit, a bit string, a bit sequence, a sequence, a value, information, a value obtained from a bit, information obtained from a bit, and the like may be interchangeably interpreted.

In the present disclosure, a "model/non-AI-based CSI feedback" may be interpreted as a model, a CSI feedback method, a CSI feedback scheme, or the like, and vice versa.

In the following embodiments, description will be given of an AI model related to UE-NW (base station, gNB) communication, and hence related subjects are a UE and a NW, but application of each of the embodiments of the present disclosure is not limited to this. For example, for communication between different subjects (for example, UE-UE communication), the UE and the NW in the following embodiments may be interpreted as a first UE and a second UE. In other words, the UE, the NW, and the like of the present disclosure may each be interpreted as any UE/NW.

In the present disclosure, transmission and reporting may be interchangeably interpreted. An average value, a center value, and a most frequent value may be interchangeably interpreted. A performance, a performance metric, and a performance monitoring metric may be interchangeably interpreted. "Top-K" in the present disclosure may mean that the rank of a value included in the CSI, such as an RSRP/SINR or the like, or the rank of a performance of an AI/ML model is between the highest rank and the K-th highest rank. An AI/ML model (AI model) in the present disclosure may be a model or a functionality used for CSI prediction/beam prediction. CSI prediction and beam prediction may be interchangeably interpreted.

In the present disclosure, a NW, a base station, and a gNB may be interchangeably interpreted. An AI/ML model, an AI model, and a model may be interchangeably interpreted. In the present disclosure, monitoring and evaluation may be interchangeably interpreted. In the present disclosure, monitoring/evaluation may mean monitoring/evaluation of an AI/ML model (performance of the AI/ML model) used for CSI prediction/beam prediction.

(Radio Communication Method)

<Time Offset for CSI Prediction>

It is studied that a UE performs CSI prediction using AI/ML. Regarding temporal time beam prediction or temporal CSI prediction, there is a possibility that predicted values (prediction time offsets) at a plurality of time instances are provided.

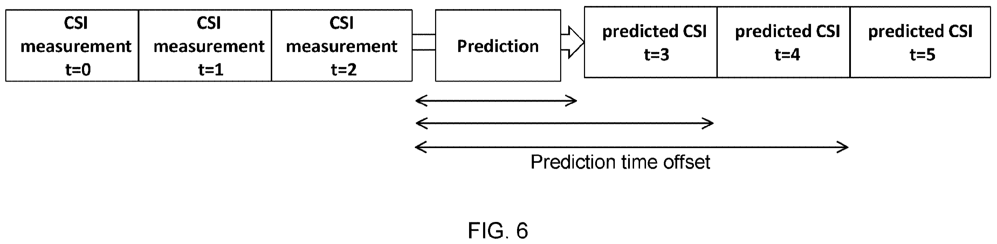

FIG. 6 is a diagram to show an example of the prediction time offset. The UE predicts CSI at t = 3 to 5, based on CSI measurement at t=2 (or t = 0 to 2). In this case, the prediction time offset may be a time difference between a time instance associated with the prediction (prediction timing) and a measurement timing used for the prediction (Prediction time offset of FIG. 6). Alternatively, the prediction time offset may be a time difference between the time instance associated with the prediction (prediction timing) and a report timing for the predicted value.

Meanwhile, a prediction performance differs depending on the prediction time offset, for some cases. For example, there is a high possibility that prediction of a time instance in the near future is easier than prediction of a time instance in the distant future. Thus, the inventors of the present invention came up with the idea of a method for appropriately evaluating a prediction performance depending on a prediction time offset.

<Embodiment 1-1>

The UE may calculate a performance(s) of prediction of Channel State Information (CSI) corresponding to one or more prediction time offsets, and may transmit the performance(s) of the prediction of the CSI to a NW (base station, gNB). The prediction time offset is, for example, a time difference between a prediction timing of the CSI and a measurement or reporting timing of the CSI.

{Embodiment 1-1-1}

The UE may calculate/transmit (report) CSI prediction performance(s) at each (all) prediction time offset(s). This enables the NW to determine an appropriate prediction time offset depending on the report. The NW can appropriately perform determination of performance/reporting of the prediction at the UE.

{Embodiment 1-1-2}

The UE may calculate/report CSI prediction performance(s) at one or more specific prediction time offset(s). Compared to Embodiment 1-1-1, it is possible to reduce a payload size of the reporting. The specific prediction time offset may be determined as described in each of options below.

Option 1: The UE may receive a configuration/indication related to the specific prediction time offset via higher layer signaling/physical layer signaling, and may determine the specific prediction time offset, based on the configuration/indication.

Option 2: The specific prediction time offset may be defined by a specification. For example, the UE may calculate/report the performances at the smallest prediction time offset and the largest prediction time offset.

Option 3: The UE may transmit UE capability information related to the specific prediction time offset, and may determine, based on the UE capability information, the specific prediction time offset for calculating/reporting the CSI prediction performance.

Option 4: Any ones of options 1 to 3 may be combined with each other. For example, the UE may apply both of the minimum prediction time offset (option 2) and the prediction time offset based on the configured/indicated parameter (option 1).

{Variations}

The UE may report a plurality of CSI prediction performances corresponding to different (a plurality of) prediction time offsets. As values to be reported, options below may be employed.

Option 1: CSI prediction performances for respective prediction time offsets to be reported may all be absolute values. In this case, processing related to the reporting can be facilitated.

Option 2: A CSI prediction performance corresponding to a part of the prediction time offsets may be reported as a differential value from a CSI prediction performance corresponding to another of the prediction time offsets. In this case, compared to the example (option 1) in which all the CSI prediction performances are reported as absolute values, it is possible to reduce overhead for the reporting. As option 2, any one of examples below may be employed.

(Example 1) A prediction performance corresponding to a specific prediction time offset may be reported as a differential value from the performance at a prediction time offset shorter than the specific prediction time offset. For example, the prediction performance may be reported as a differential value from the performance at the largest prediction time offset among prediction time offsets shorter than the specific prediction time offset.

The performance at the shortest prediction time offset is reported as an absolute value. For example, the prediction time offset corresponding to t = 5 of FIG. 6 may be reported as a differential value from the time offset corresponding to t = 4.

(Example 2) A prediction performance corresponding to a specific prediction time offset may be reported as a differential value from the performance at a prediction time offset longer than the specific prediction time offset. For example, the prediction performance may be reported as a differential value from the performance at a minimum prediction time offset among prediction time offsets longer than the specific prediction time offset. The performance at the longest prediction time offset is reported as an absolute value. For example, the prediction time offset corresponding to t = 4 of FIG. 6 may be reported as a differential value from the time offset corresponding to t = 5.

(Example 3) A prediction performance corresponding to a specific prediction time offset (for example, the shortest/longest prediction time offset) is reported as an absolute value. The performance at another prediction time offset is represented as a differential value from the performance at the specific prediction time offset. For example, the prediction time offset (another prediction time offset) corresponding to t = 5 of FIG. 6 may be reported as a differential value from the time offset (shortest prediction time offset) corresponding to t = 3. A method of determining the specific prediction time offset may be determined in a manner similar to that of options 1 to 4 of Embodiment 1-1-2.

(Example 4) An average value of prediction performances corresponding to a plurality of/all prediction time offsets is reported as an absolute value. The performance at each prediction time offset is reported as a differential value from the average value.

(Example 5) A plurality of certain periods may be configured, a prediction performance corresponding to a prediction time offset in any one of the certain periods may be reported as an absolute value, and a prediction performance corresponding to another prediction time offset in the certain period may be reported as a differential value. For example, a prediction performance corresponding to the $10 \times N$ th prediction time offset may be reported as an absolute value, and prediction performances corresponding to the $10 \times N$-1, $10 \times N$-2, ..., $10 \times N$-9 th prediction time offsets may be reported as differential values. Alternatively, a prediction performance corresponding to the $10 \times N$ th prediction time offset may be reported as an absolute value, and prediction performances corresponding to the $10 \times N$+1, $10 \times N$+2, ..., $10 \times N$+9 th prediction time offsets may be reported as differential values.

{Supplements}

The prediction time offset may be defined as any one of the following.

Definition 1: A time difference between a time instance associated with the prediction (CSI prediction timing) and a time instance associated with a measurement used for the prediction (CSI measurement timing).

Definition 2: A time difference between a time instance associated with the prediction (CSI prediction timing) and a time instance associated with a report of a predicted value (timing of reporting of a CSI predicted value).

The time instance associated with the prediction (CSI prediction timing) may, when the predicted value is represented by a value corresponding to a period, be the first/last/middle symbol/slot/subframe in the period, for example.

The time instance associated with the measurement used for the prediction (CSI measurement timing) may be the first/last/middle symbol/slot/subframe for a specific measurement used for the prediction. When measurements at a plurality of time instances are used for the prediction, the specific measurement may be the oldest measurement, the newest measurement, or the middle measurement.

The time instance associated with the report of the predicted value (timing of reporting of the CSI predicted value) may be the first/last/middle symbol/slot/subframe for a PUSCH/PUCCH resource for communicating the report of the predicted value.

{Embodiment 1-1-3}

The UE may calculate/report an average value of CSI prediction performances corresponding to a plurality of specific prediction time offsets. The specific prediction time offset may be determined as described in each of options below. In this case, compared to the case where CSI prediction performances corresponding to a plurality of (for example, all) prediction time offsets are transmitted, it is possible to reduce overhead for the reporting.

Option 1: The UE may receive a configuration/indication related to the specific prediction time offset via higher layer signaling/physical layer signaling, and may determine the specific prediction time offset, based on the configuration/indication.

Option 2: The specific prediction time offset may be defined by a specification. For example, the UE may calculate/report an average value of CSI prediction performances at all available prediction time offsets in a case where a specific (one) functionality/model is used.

Option 3: The UE may transmit UE capability information related to the specific prediction time offset, and may determine, based on the UE capability information, one or more specific prediction time offsets for calculating/reporting the average value of the CSI prediction performances.

Option 4: Any ones of options 1 to 3 may be combined with each other. For example, a configuration/indication indicating some of the prediction time offsets in the case where the specific (one) functionality/model is used may be received via higher layer signaling/physical layer signaling, and an average value of CSI prediction performances at the configured/indicated prediction time offsets may be calculated/reported (option 1 + option 2).

{Embodiment 1-1-4}

The UE may calculate/report a weighted CSI prediction performance corresponding to a specific prediction time offset. The specific prediction time offset may be determined in a manner similar to that of each option of Embodiment 1-1-3.

The UE may calculate/report a weighted CSI prediction performance, based on the following equation.

CSI prediction performance = total value or average value of (CSI prediction performance corresponding to prediction time offset $\times$ weight related to prediction time offset)

The weight related to a prediction time offset may be determined as described in options below.

Option 1: The UE may receive a configuration/indication of the weight related to a prediction time offset via higher layer signaling/physical layer signaling, and may determine the weight, based on the configuration/indication.

Option 2: The weight related to a prediction time offset may be defined by a specification. For example, the weight may be calculated based on an associated prediction time offset value. For example, the weight may be proportional to a prediction time offset value (or an index of a prediction time offset value).

Option 3: The UE may transmit UE capability information related to the weight for a prediction time offset, and may determine, based on the UE capability information, the weight for a prediction time offset.

Option 4: Any ones of options 1 to 3 may be combined with each other. For example, the weight for the smallest/largest prediction time offset may be 1 (option 2), and the weight for another prediction time offset may be based on the configuration/indication (option 1).

It is considered that a CSI prediction performance differs depending on a prediction time offset. Thus, the UE considers a weight associated with a prediction time offset in such a manner as that described in the present embodiment, thereby enabling an appropriate CSI prediction performance to be reported.

<Performance Monitoring for Beam Prediction>

It is studied to predict the top-K beams with larger RSRPs/SINRs. For example, if performance metrics for the top-K beam predictions can be calculated, performance metrics for the first, second, ..., and K-1 th beam predictions can also be calculated based on the same information. An example of performance monitoring for the beam prediction will be described below.

<Embodiment 1-2>

The above example (AI-based beam reporting) (see, for example, FIG. 5A and FIG. 5B) may be applied to the beam prediction in Embodiment 1-2 (Embodiments 1-2-1, 1-2-2). The UE may predict a plurality of (top-K) beams (in prediction performances) with the largest RSRP/SINR (or greater than a certain value), and may report a predicted value/prediction performance.

{Embodiment 1-2-1}

The UE may predict the top-X beams with larger RSRPs/SINRs for a plurality of X values, and may transmit (report), in one report, a performance of at least one beam prediction among the top-X beam predictions corresponding to the plurality of X values. For example, the UE may transmit (report), for N Xs ($X_1$, ..., $X_N$), a performance of at least one beam prediction among the top-$X_1$ beam predictions, the top-$X_2$ beam predictions, ..., and the top-$X_N$ beam predictions. X is a value less than or equal to K. X may be defined by a specification, may be based on UE capability information, or may be configured/indicated to the UE by higher layer signaling/physical layer signaling. Performances of the top-1, top-2, ..., and top-K-1 beam predictions may be calculated based on information on performances of the top-K beam predictions.

The beam prediction is to perform prediction associated with the beams, and indicates prediction of the largest RSRP/SINR and prediction of RSRPs/SINRs of the beams, for example.

X may be determined based on a certain rule. The UE may, when a performance of the top-X beam predictions is lower/higher than a threshold value, report the performance of the top-X beam predictions. X may be defined by a specification, may be transmitted from the UE to the NW via UE capability information, or may be configured/indicated to the UE by higher layer signaling/physical layer signaling.

As methods for the UE to report a plurality of performances of the top-X beam predictions, options below may be employed.

Option 1: The UE may, when reporting a plurality of performances of the top-X beam predictions, report each performance as an absolute value.
Option 2: The UE may, when reporting performances of the top-X beam predictions, report a performance of a part of the beam predictions as a differential value from a performance of another of the beam predictions. This enables overhead for the reporting to be reduced.

For example, the UE may report a performance of the top-X beam predictions as a differential value from a performance of the top-X-1 beam predictions, and may report a performance of the first beam prediction as an absolute value.

For example, the UE may report a performance of the top-X beam predictions as a differential value from a performance of the top-X+1 beam predictions, and may report a performance of the K th beam prediction as an absolute value.

For example, the UE may report a performance of beam predictions other than the specific top-X' beam predictions, among a plurality of performances of the top-X beam predictions, as a differential value from a performance of the X' beam predictions, and may report a performance of the X' beam predictions as an absolute value.

For example, the UE may report an average value of all (two or more) of the plurality of performances of the top-X beam predictions as an absolute value, and may report a performance of each of the top-X beam predictions as a differential value from the average value.

The UE transmits, in one report, a performance of a prediction of at least one beam among the predicted beams, thereby enabling overhead to be reduced compared to a case where performances of predictions of all the beams are transmitted.

{Embodiment 1-2-2}

The UE may report, based on beam prediction performances (for example, a plurality of top-X beam prediction performances), a specific number indicating which higher ranked beam prediction is to be performed. The specific number may be defined by a specification, may be transmitted from the UE to the NW via UE capability information, or may be configured/indicated to the UE by higher layer signaling/physical layer signaling. The specific number may be K or X in Embodiment 1-2-1, or may be a number less than K or X.

Option 1: The UE may autonomously determine the specific number above.

Option 2: The UE may determine the specific number above for reporting predicted values for beam measurements, based on a certain rule. The UE may receive a configuration/indication related to the specific number via higher layer signaling/physical layer signaling, and may determine the specific number, based on the configuration/indication.

Option 2-1: When the top-X beam prediction performances are greater than a threshold value based on a parameter configured by the NW, the UE reports a specific number (X). The parameter may correspond to a certain period.

Option 2-2: When the top-X beam prediction performances are greater than at least one (one/some/all) of the top-X' (where X' is different from X) beam prediction performances (are greater in consideration of a certain offset), the UE reports a specific number (X). The top-X' beam prediction performances and the top-X beam prediction performances to be compared with each other may be beam prediction performances corresponding to a certain period.

The offset, the threshold value, and the certain period may be configured/indicated to the UE by higher layer signaling/physical layer signaling, or may be defined by a specification.

The UE reports, based on beam prediction performances, which higher ranked beam prediction is to be performed, thereby enabling the NW to indicate or configure the appropriate top-X beam predictions.

<Data Collection>

It is considered that, for the purpose of data collection related to AI/ML (for example, CSI/beam prediction using the AI/ML), offline training, slow monitoring/model validation (for model update judgment), fast monitoring (for model switching or fallback), and the like are performed.

It is considered that performance monitoring for CSI/beam prediction is performed for judgment of model update, model/functionality switching, and fallback. The model update may be determined by a training entity. The model/functionality switching may be determined by the NW. In this case, the NW may acquire a result of the monitoring.

<Gap-Based Performance Metric>

There is a possibility that a UE vendor hopes to avoid disclosing or reporting performances of models and functionalities to other vendors. For example, it is sufficient to judge model or functionality switching or fallback operation, based on a performance difference rather than an absolute value. For example, it is considered that a performance difference between models or functionalities or a performance difference between an AI functionality and a fallback operation is reported.

<Embodiment 1-3>

{Embodiment 1-3-1}

The UE may perform performance monitoring of one or more models/functionalities/fallback operations, and may transmit (report) the result of the monitoring. The model may be an AI/ML model used for CSI/beam prediction. The functionality may be an AI/ML functionality used for CSI/beam prediction. The monitoring result may be information indicating models/functionalities/fallback operations, performance metrics (for example, performance metrics to be described in Embodiment 1-4), and the like.

For example, the UE may report one monitoring result of a model/functionality/fallback operation that has achieved the highest/lowest performance monitoring metric in the monitoring. The UE may report one monitoring result of a model/functionality/fallback operation that has achieved the lowest performance monitoring metric. The UE may transmit (report), in the same reporting instance (one report), a monitoring result of one or more models/functionalities/fallback operations.

The fallback operation (fallback operation corresponding to the functionality/model) may mean an operation in which AI/ML used for CSI/beam prediction is not enabled. For example, a fallback operation corresponding to a specific functionality/model may be operation 1 or operation 2 below in which the AI/ML is not enabled.

Operation 1: An operation in which the AI/ML is not enabled (is disabled), the operation being based on measurement used when a corresponding specific functionality/model is used.

Operation 2: An operation in which the AI/ML is not enabled, the operation being based on a non-AI support functionality (Type 2 codebook (TypeII CB), enhanced Type 2 codebook (eType-II CB), a positioning method, or the like) including measurement used when a corresponding specific functionality/model is used.

{Embodiment 1-3-2}

The UE may transmit (report) a performance difference (differential value) between a plurality of models/functionalities/fallback operations to be monitored. In other words, the UE may transmit, as a result of the monitoring, a performance difference between a specific model, a specific functionality, or a specific fallback operation and another model, another functionality, or another fallback operation. The UE may transmit, in the same reporting instance (one report), a plurality of the performance differences. The performance difference (differential value) is directed, thereby enabling overhead to be reduced as compared to a case of reporting an absolute value. It is possible to avoid disclosing an absolute value of a performance. For example, options below may be applied.

Option 1: The UE may report a performance of each model/functionality/fallback operation as a differential value from the value to be reported in Embodiment 1-3-1.
Option 2: The UE may report a performance of each model/functionality/fallback operation as a differential value from that of each model/functionality/fallback operation that has achieved a performance being one rank above/below the performance.
Option 3: The UE may report a performance of each model/functionality/fallback operation as a differential value from that of a specific model/functionality/fallback operation. The UE may determine the specific model/functionality/fallback operation, based on a certain rule or a parameter configured/indicated by higher layer signaling/physical layer signaling.

<Performance Metric>

It is difficult to compare the fallback operation with the model/functionality, based on a specific (same) performance metric. For example, there is a possibility that the model/functionality derives a predicted value (for example, beam prediction, CSI prediction, or the like), but the fallback operation does not derive a predicted value. In this case, there is a problem that a metric indicating prediction accuracy of the fallback operation cannot be calculated. Thus, it is preferable to study not only a performance metric related to derivation of a predicted value but also another performance metric.

<Embodiment 1-4>

The UE may monitor/calculate/evaluate/report a performance metric (hypothesis of a performance metric) for a model/functionality/fallback operation. In this case, the performance metric may be a predicted value rather than an actual value. For example, the performance metric may be at least one of performances below:

(1) Throughput to be achieved when the corresponding model/functionality/fallback operation is applied (for example, average/5% User Perceived Throughput (UPT));
(2) Received power (L1/L3 RSRP/SINR) to be achieved when the corresponding model/functionality/fallback operation is applied;
(3) An average block error rate (BLER) to be achieved when the corresponding model/functionality/fallback operation is applied;
(4) A retransmission response (NACK/ACK) when the corresponding model/functionality/fallback operation is applied; and
(5) Measured actual RSRP/SINR (L1/L3 RSRP/SINR) corresponding to the predicted or measured top-K (for example, highest) beams. For example, when prediction of the top-K beams is applied, the performance metric may be the largest RSRP/SINR among actual measured values of beams corresponding to the prediction of the top-K beams. For example, when the fallback operation is applied, the performance metric may be the largest RSRP/SINR among beam measurements used for the beam prediction.

For the performance (performance metric) to be monitored, examples to be described below may further be applied. Note that, as the performance to be monitored in the present disclosure, the examples may be applied in combination.

{Performance Monitoring in UE}

An example of the performance monitoring at the UE will be described.

When both an encoder and a decoder are available for the UE, the UE may monitor a real-time performance (which may be referred to as an actual performance). The actual performance may mean a performance of CSI computed based on an AI model output, as compared to target CSI.

The performance to be monitored may be at least one of the following:

(1) Generalized Cosine Similarity (GCS)/Squared GCS (SGCS) between CSI computed based on an output from an AI model and target CSI of the AI model (for example, CSI computed based on channel measurement) (which may include enhanced GCS/SGCS for Layer > 1),

(2) communication quality computed based on an output from the AI model, for example, a CQI satisfying a certain block error probability in assumption for specific resource allocation, and

(3) Normalized Mean Square Error (NMSE)/Mean Square Error (MSE) between the CSI calculated based on the output from the AI model and the target CSI of the AI model.

Here, in the present disclosure, the target CSI may be, for example, CSI calculated based on channel measurement, or ideal CSI. In the present disclosure, the ideal CSI may mean ideal CSI without error output from the AI model, or may mean CSI output from the AI model, corresponding to a specific input (or any input). The ideal CSI may be referred to as fixed CSI and the like.

The CSI in (1)/(3) may be at least one of a precoding matrix, one or more precoding vectors, and one or more eigenvectors. The CSI in (1)/(3) may be quantized CSI. The CSI computed based on the output from the AI model in (1)/(3) may correspond to CSI reconstructed by the AI model.

The CQI in (2) may be, for example, at least one of a broadband CQI, an average of subband CQIs, a weighted average of subband CQIs, a maximum/minimum of subband CQIs, and the like. The specific resource allocation may correspond to frequency/time resource allocation for reception of a certain channel/signal (for example, a PDSCH, a PDCCH, or a corresponding DMRS), and what type of resource allocation the specific resource allocation is (for example, the number of symbols, the number of resource blocks, and the like to be assumed) may be defined by a specification. The certain block error probability may be, for example, at least one of 0.1, 0.00001, and the like.

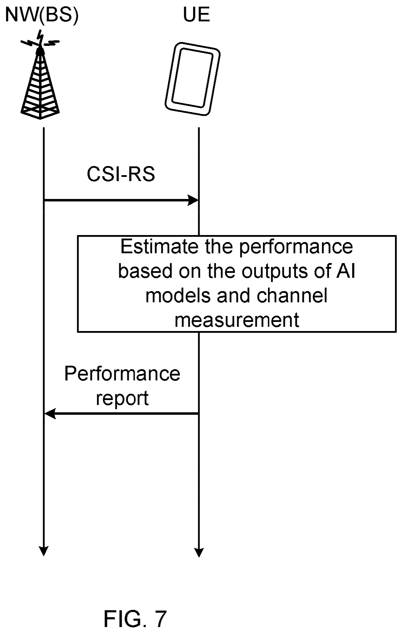

FIG. 7 is a diagram to show an example of the performance monitoring. In the present example, for simplicity, assume that the CSI output from the decoder is reconstructed CSI corresponding to an input to the encoder. Note that the decoder of the UE is merely provided for performance monitoring, and a CSI feedback transmitted by the UE is an output from the encoder. The UE includes at least one encoder illustrated and a corresponding decoder.

In the present example, the UE performs channel measurement, based on a CSI-RS transmitted from a BS, and estimates the performance, based on an output from the AI model and the channel measurement. The UE may transmit a performance report to the BS as necessary.

According to the performance monitoring described above, real-time performance with high reliability can be monitored.

{Performance to Be Monitored}

The UE may be notified of which performance of which AI model/fallback scheme is to be monitored, from a network.

In the present disclosure, fallback/fallback scheme may be interpreted as non-AI-based beam reporting, a beam report without prediction, or the like, and vice versa.

The UE may monitor a performance of a certain model/fallback scheme. In the present disclosure, the model whose performance is monitored may be referred to as a monitored model. Note that a registered model (to which registration is applied)/configured model may correspond to a monitored model/activated model.

In the present disclosure, the performance to be monitored may be at least one of the following:

(1) actual L1-RSRP (without prediction) for performance monitoring reference;
(2) actual L1-RSRP (without prediction) used to input an AI model prediction;
(3) AI model-based predicted L1-RSRP;
(4) an L1-RSRP difference between the top predicted L1-RSRP and the top L1-RSRP for performance monitoring reference;

(5) the smallest L1-RSRP difference between one of the top-K predicted L1-RSRPs and the top L1-RSRP for performance monitoring reference;

(6) whether a CRI/SSBRI associated with one of the top-K predicted L1-RSRPs corresponds to a CRI/SSBRI corresponding to the top L1-RSRP for performance monitoring reference;

(7) whether a CRI/SSBRI associated with the top predicted L1-RSRP corresponds to one of CRIs/SSBRIs corresponding to the top-K L1-RSRPs for performance monitoring reference;

(8) whether all CRIs/SSBRIs associated with the top-K predicted L1-RSRPs correspond to CRIs/SSBRIs corresponding to the top-K L1-RSRPs for performance monitoring reference;

(9) accuracy (for example, percentage) with which, over a certain period, a CRI/SSBRI associated with one of the top-K predicted L1-RSRPs corresponds to a CRI/SSBRI corresponding to the top L1-RSRP for performance monitoring reference;

(10) accuracy (for example, percentage) with which, over a certain period, a CRI/SSBRI associated with the top predicted L1-RSRP corresponds to one of CRIs/SSBRIs corresponding to the top-K L1-RSRPs for performance monitoring reference;

(11) accuracy (for example, percentage) with which, over a certain period, all CRIs/SSBRIs associated with the top-K predicted L1-RSRPs correspond to CRIs/SSBRIs corresponding to the top-K L1-RSRPs for performance monitoring reference;

(12) X% percentile of an L1-RSRP difference between the top predicted L1-RSRP and the top L1-RSRP for performance monitoring reference, over a certain period;

(13) X% percentile of the smallest L1-RSRP difference between one of the top-K predicted L1-RSRPs and the top L1-RSRP for performance monitoring reference, over a certain period;

(14) whether the top predicted L1-RSRP is included in Y dB (decibel) of the top L1-RSRP for performance monitoring reference, over a certain period; and

(15) percentage with which the top predicted L1-RSRP is included in Y dB of the top L1-RSRP for performance monitoring reference, over a certain period.

Note that, in the present disclosure, an L1-RSRP, an L1-SINR, and another metric (for example, a beam-related quality metric, CSI, or the like) may be interchangeably interpreted.

The X% percentile may mean a value located at X% of the whole data in an ascending order.

The values of K, X, Y, the certain period, and the like above (or information related to the values) may be predefined by a specification, may be determined based on a UE capability, may be notified from the NW to the UE, or may be included in AI model information (or may be determined based on a model).

With the processing described above, the UE can appropriately perform performance monitoring.

{Beam Information for Beam Prediction}

Information (beam information) for beam prediction (or related to beam prediction) will be described. The performance metric may include at least one of beam information below.

The UE may transmit the beam information to the network. The beam information may include at least one of information to be described below. Which information is to be included in the beam information may be notified from the network to the UE, may be defined by a specification, or may be derived from a model (associated model) used for the beam prediction. The beam information may be derived from at least one of information notified from the network to the UE without reporting by the UE, a value defined by a specification, a model (associated model) used for the beam prediction, or the like.

The beam information may include information indicating a resource. The information indicating a resource may be referred to as a resource indicator, a channel resource indicator, or the like, and may be, for example, at least one of an SSBRI, a CRI, an SRS resource indicator, and the like. The resource indicator above may be associated with a time instance/duration described below (may be identified by a time instance/duration, for example). In the present disclosure, a CRI/SSBRI may be interpreted as a resource indicator, and vice versa.

The beam information may include information indicating the number of resource indicators. The information may indicate the number of resource indicators included in one piece of beam information (which may be referred to as a reporting instance or the like). Note that, in the present disclosure, the reporting instance may be interpreted as a beam report, a CSI report, a report, or the like, and vice versa.

The beam information may include information indicating a capability index for measurement/prediction. The capability index may indicate a panel for a corresponding resource indicator, and may be interpreted as a panel index, a UE capability value, a UE capability value set, or the like, and vice versa. In the present disclosure, the resource indicator may be interpreted as a resource indicator/capability index, and vice versa.

The beam information may include information indicating a beam ID. The beam ID may be associated with a beam. The beam ID may be associated with a specific reference signal (for example, a CSI-RS, an SSB, an SRS, or a positioning reference signal (PRS)). The beam ID above may be associated with a time instance/duration described below.

The beam information may include information indicating an L1-RSRP. The L1-RSRP may correspond to a resource (may be measured/predicted based on the resource). The L1-RSRP may be associated with a time instance/duration described below.

The beam information may include information indicating top-X probability. The top-X probability of a certain resource among one or more resources may mean a probability/confidence level/confidence interval with an RSRP or an SINR corresponding to the certain resource greater than or equal to the X-th largest RSRP or SINR among RSRPs or SINRs corresponding to the one or more resources. This confidence interval may be a confidence interval of any percent (for example, 95%).

The beam information may include information indicating top-X'/1 probability. The top-X'/1 probability related to one or more resources may mean a probability/confidence level/confidence interval with which at least one of RSRPs corresponding to X' resources becomes the largest among RSRPs or SINRs corresponding to the one or more resources. This confidence interval may be a confidence interval of any percent (for example, 95%). Note that, in a case where different top-X'/1 probabilities can be obtained for the same value of X' depending on how resources are selected, any one of these values (for example, a maximum value) may be determined as the top-X'/1 probability.

Note that the information indicating the L1-RSRP, the top-X probability, or the top-X'/1 probability may include information (difference information) indicating a difference from another L1-RSRP, top-X probability, or top-X'/1 probability.

Information indicating the L1-RSRP, the top-X probability, and the top-X'/1 probability or difference information on these values may be quantized information (quantization information). The quantization information may correspond to information representing a difference of L1-RSRPs, top-X probabilities, top-X'/1 probabilities, or these values by using a specific number of bits sectioned by specific quantization resolution (for example, dB step size) for a specific representable range (a value indicated by the bits corresponds to any step (section)).

Note that it is preferable that the quantization information with the difference information be represented by the number of bits smaller than that of the quantization information with non-difference information (for example, lower quantization resolution or narrower representable range than the quantization information with non-difference information), but may be represented by the same or larger number of bits.

The information related to X, X', the specific range, the specific quantization resolution, the specific number, and the like may be notified from the network to the UE, may be defined by a specification, may be derived from a model (associated model) used for beam prediction, or may be determined based on other information in the same reporting instance.

The beam information may include information indicating a time instance (time instance information). In the present disclosure, the time instance may mean a measured/predicted time (in other words, a time to be measured/predicted). Note that the time instance may be interpreted as a time stamp, and vice versa.

The time instance information may indicate at least one of a symbol index, the number of symbols, a slot index (in a subframe/frame), the number of slots, a system frame number, a reference signal (resource) occasion, and the like indicating a time instance associated with a resource indicator/beam ID.

The time instance may be represented as a timing Y time units (for example, symbols, slots, milliseconds, subframes, frames, or the like) before (past) or after (future) a specific timing. The specific timing may be, for example, a start/end timing of a CSI reference resource, a timing at which the beam information including the time instance is reported, or an RS occasion used for the measurement.

The information related to the specific timing, Y, and the like above may be notified from the network to the UE, may be defined by a specification, may be derived from a model (associated model) used for beam prediction, or may be determined based on other information in the same reporting instance.

The beam information may include information indicating the number of time instances. The information may indicate the number of pieces of time instance information included in a reporting instance.

The beam information may include information indicating duration (duration information). In the present disclosure, the duration may mean the length of a time to be measured/predicted. The duration information may indicate the number of time units (for example, symbols, slots, milliseconds, subframes, frames, reference signal occasions, or the like) indicating the length of a time associated with a resource indicator/beam ID. The duration may be duration based on a specific timing (for example, from a specific timing). For example, the specific timing may be a start/end timing of a CSI reference resource, a timing at which the beam information including the time instance is reported, an RS occasion used for the measurement, a time after an end of specific duration (for example, last duration), or may be indicated by the time instance information above.

The beam information may include information indicating the number of durations. The information may indicate the number of pieces of duration information included in a reporting instance.

The time instance/duration may be associated with an L1-RSRP, a top-X probability, or a top-X'/1 probability.

The beam information may include at least one of beam information for set A and beam information for set B.

For example, it is preferable that, for data collection on the NW side, the UE report beam information for set B including a beam measurement result (such as an L1-RSRP) for set B. It is preferable that, for data collection on the NW side, the UE report beam information for set A including a beam measurement result (such as an L1-RSRP) for set A or information (for example, a resource indicator) indicating (results of) the top-K (K ≥ 1) beams for set A without a beam measurement result.

It is preferable that, for model monitoring on the NW side, the UE report beam information for set A including a beam measurement result (such as an L1-RSRP) for set A or information (for example, a resource indicator) indicating the top-K (K ≥ 1) beams for set A without a beam measurement result.

It is preferable that, when model inference is performed on the UE side, the UE report beam information for set A including a beam prediction result (such as an L1-RSRP) for set A or information (for example, a resource indicator) indicating the top-K (K ≥ 1) predicted beams for set A. The beam information for set A may also include a time stamp for a predicted time.

It is preferable that, when model inference is performed on the NW side, the UE report beam information for set B including a beam measurement result (such as an L1-RSRP) for set B. The beam information for set B may also include a time stamp for a measured time.

According to the examples described above, the UE can report beam information including appropriate information.

<Meta Information>

The UE may receive at least one of the following as meta information.

Note that the name "meta information" in the present disclosure is merely an example, and the meta information may mean at least one of specific configuration information, scenario information, environment information, assistance information, and model information. In the present disclosure, meta information, configuration information, scenario information, environment information, assistance information, and model information may be interchangeably interpreted.

The meta information used by the UE/NW may include at least one of information related to NW configuration/deployment, information related to an environment, information related to the AL/ML model on the NW side, and information related to the model requested by the NW.

The information related to NW configuration/deployment may include information related to an antenna configuration, for example.

The information related to an antenna configuration may indicate at least one of the number of horizontal/vertical antenna elements/panels, the number of ports, an antenna interval, an antenna position, a panel position, and transceiver unit (TxRU) mapping, for example.

The information related to NW configuration/deployment may include information related to a beam configuration, for example.

The information related to a beam configuration may include at least one of a beam width, the number of beams, and a beam direction, for example.

The information related to NW configuration/deployment may include information related to a TRP, for example.

The information related to a beam configuration may include at least one of an altitude of a TRP and relative locations of multi-TRP, for example.

The information related to an environment may include information related to a deployment scenario, for example.

The information related to a deployment scenario may indicate at least one of an Urban Macro (UMa), an Urban Micro (Umi), and an indoor hotspot (InH), for example.

The information related to an environment may include information related to "indoor" or "outdoor", for example.

The information related to "indoor" or "outdoor" may indicate a probability of being indoor/outdoor, for example.

The information related to an environment may be information related to objects around the UE/base station, for example.

The information related to objects around the UE/base station may indicate deployment of the objects around the UE/base station, for example.

The information related to an environment may include a scenario configuration format (meta information) to be described below, for example.

A use case using the AI model may be associated with the scenario configuration format including long-term features (long-tern features).

Note that the long-term features may be interpreted as short-term/medium-term/long-term features, simply features, or the like, and vice versa. The scenario configuration format may be interpreted as meta information, a meta information format, a scenario and configuration format, a scenario configuration format, a scenario format, a configuration format, a use case format, an environment format, a meta format, or the like, and vice versa. The format may be interpreted as a type, a mode, a data, a configuration, or the like, and vice versa.

The features above may include one or a plurality of combinations of the following elements:

- scenario/model (an Urban Macro (UMa), an Urban Micro (Umi), indoor, outdoor, an indoor hotspot (InH), or the like),
- frequency/frequency range,
- numerology (or a subcarrier spacing),
- distribution/set of general channel parameters (for example, inter-site distances (ISD), gNB height, delay spread, angle spread, Doppler spread, or the like) in a single scenario/model,
- UE distribution,
- UE speed,
- UE track,
- number of transmit beams/receive beams,
- UE rotation pattern,
- gNB/UE antenna configuration (for example, transmit and receive antenna vectors),
- number of cells/number of sectors,
- bandwidth,
- UE payload,
- channel quality (for example, RSRP, SINR),
- beam configuration ID,
- physical cell ID (PCI),
- global cell ID (GCI),
- absolute radio frequency channel number (ARFCN),
- probability of Line Of Site (LOS)/Non-Line Of Site (NLOS).

It may be expected that the UE is configured/registered with a model whose associated scenario configuration format matches a configuration/status of the UE.

It may be expected that the UE activates a model whose associated scenario configuration format matches the configuration/status of the UE.

Correspondence between the use case and the scenario configuration format may be defined by a specification, or information related to the correspondence may be notified to the UE. The features included in the scenario configuration format corresponding to the use case may be defined by a specification, or information related to the features may be notified to the UE.

The information related to the AL/ML model on the NW side may include information related to paired models available on the NW side, for example.

The information related to paired models available on the NW side may indicate paired decoders for CSI compression, for example.

The information related to the AL/ML model on the NW side may include information related to preprocessing/-post-processing available on the NW side, for example.

The information related to preprocessing/post-processing available on the NW side may include at least one of quantization/dequantization processing, DFT transform, IDFT transform, FFT transform, and IFFT transform, for example.

<KPI for Performance Monitoring of AI/ML in Beam Management>

As Key Performance Indicators (KPIs) for performance monitoring of AI/ML, KPIs below are under study, for example. In the present disclosure, a genie-aided beam may mean a beam with the highest/lowest or higher/lower top-K metrics (for example, values such as L1-RSRPs/L1-SINRs) among actually measured beams.

KPI-1: A difference from an L1-RSRP of the top-1 predicted beam. For example, a difference between an ideal L1-RSRP of the top-1 predicted beam and an ideal L1-RSRP of the top-1 genie-aided beam.
KPI-2: Prediction accuracy (%) using the top-1 and top-K beams. This is indicated by percentages below, for example.

Top-1 (%): A percentage of the top-1 genie-aided beam that is the top-1 beam,
Top-K/1 (%): A percentage of the top-1 genie-aided beam that is one of the top-K predicted beams
Top-1/K (%): A percentage of the top-1 predicted beam that is one of the top-K genie-aided beams.

KPI-3: A cumulative distribution function (CDF) of a difference from an L1-RSRP of the top-1 predicted beam. For example, a CDF of KPI-1.

KPI-4: Beam prediction accuracy (%) with consideration of a 1 dB margin for the top-1 beam. For example, a percentage of an ideal L1-RSRP of the top-1 genie-aided beam that is within 1 dB of an ideal L1-RSRP of the top-1 beam.

KPI-5: A difference from a predicted L1-RSRP. A difference between an L1-RSRP of the top-1/K (%) predicted beam and an ideal L1-RSRP of the same beam.

When KPI-1 to KPI-4 are applied, set B/set A measurement, set A prediction based on set B, and performance monitoring are performed. When KPI-5 is applied, set B measurement, set A prediction, top-1 (or 1/K (%)) prediction of set A measurement, and performance monitoring are performed. The L1-RSRP may be replaced with another value (for example, an L1-SINR or the like) included in CSI.

Beams/RSs associated with an output (prediction result) of the AI model may be referred to as set A. Beams/RSs associated with an input to the AI model may be referred to as set B. Assuming that the size of set B is M, the size of set A is N, and M << N, respective processing contents and overheads can be defined as follows.

Set B measurement: L1-RSRP measurement for set B. Overhead is M. Set A prediction: Using a learned model to predict an L1-RSRP of set A, based on measured data of set B. Overhead in this case is 0.

Set A measurement: An L1-RSRP of set A is measured as an L1-RSRP of the genie-aided beam. Assume that overhead in this case is N. Top-1 (and top-1/K (%)) measurement of set A: Top-1 (and top-1/K (%)) L1-RSRP measurement for set A. Overhead in this case is 1 (1/K).

Performance monitoring: Calculation of an existing KPI. Overhead in this case is 0.

According to the above definitions, overhead when KPI-1 to KPI-4 are applied is M+N, and overhead when KPI-5 is applied is M+1 (or 1/K). Accordingly, overhead for KPI-5 << overhead for KPI-1 to KPI-4.

<Performance Monitoring of AI/ML Model Based on Top-K Predictions>

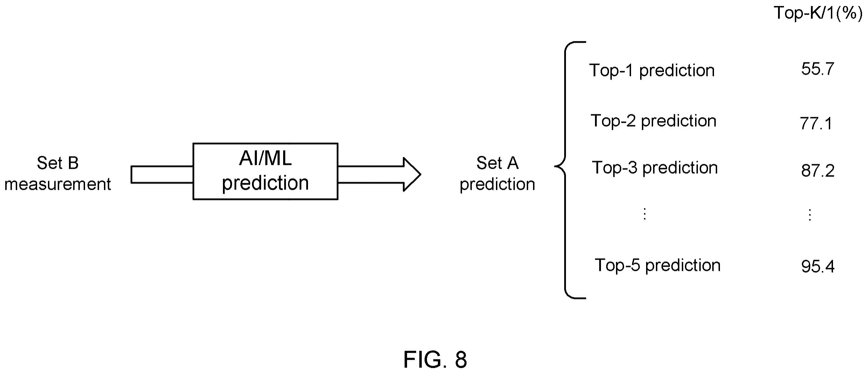

FIG. 8 is a diagram to show an example of the accuracy with top-K/1 (%) in the set A prediction. As shown in FIG. 8, the accuracy with top-K/1 (%) improves as K increases. This means that the top-K prediction including the top-1 genie-aided beam is more effective than the top-1 prediction and that performance monitoring based on the top-K prediction is more reliable than performance monitoring based on the top-1 prediction.

It is preferable to adopt a metric calculated based on the top-K predicted beams and real measured values corresponding to the K predicted beams and the like, in place of a KPI associated with existing prediction accuracy (for example, a difference from an averaged L1-RSRP of the top-1 predicted beam) requiring excessive measured values related to set A. Meanwhile, a method of determining this K and performance monitoring based on the top-K predictions remain unclear. Thus, the inventors of the present invention came up with the idea of a method of determining K and a method for appropriately performing performance monitoring based on the top-K predictions.

{Outline of Embodiments 2-1 to 2-11}

As described above, the UE/NW (base station, gNB) may perform performance monitoring (for example, calculation of top-K/1 (%)) of the AI/ML model, based on a certain number of top(-K) predicted beams. "Top-K" in the present disclosure may mean that the rank of a performance of the AI/ML model or the rank of a value included in the CSI, such as an RSRP/SINR, is between the highest rank and the K-th highest rank. Embodiments 2-1 to 2-4 describe determination of K in the UE/NW. Embodiments 2-5 to 2-6 describe performance monitoring at the NW. Embodiments 2-7 to 2-11 describe performance monitoring at the UE.

<Embodiment 2-1>

Embodiment 2-1 describes a case where the NW (base station, gNB) determines K. The UE may transmit (report), to the NW, information related to performance monitoring of the AI/ML model. The NW may determine K, based on the received information, and may transmit this K to the UE.

Option 1: The UE may report channel/scenario type information. The channel/scenario type information is a channel/scenario type associated with a measured value for computing KPI information, and may be, for example, an ID (data set ID) for identifying a characteristic of the measured value.

Option 2: The UE may report assistant KPI information. The assistant KPI information is information for determining K. For example, the assistant KPI information may be at least one piece of information below. The NW may determine K such that these values become higher/lower.

- An average of L1-RSRP differences from the top-1 predicted beam
- Beam prediction accuracy (%) for top-1/top-K beam
- A CDF of an L1-RSRP difference from the top-1 predicted beam
- Beam prediction accuracy (%) with consideration of a 1 dB margin for the top-1 beam
- UE throughput
- Reduced RS overhead
- Reduced latency
- Reduced power consumption

Option 3: The UE may report information related to a performance requirement necessary for determination of K (for example, the top-K/1 accuracy (%)). The NW may determine K to satisfy this performance.
Option 4: Any combination of options 1 to 3 above may be applied.

{Method of Determining K}

The channel type described in option 1 above is represented as 0: Urban Macro (UMa), 1: Urban Micro (UMi), or 2: Indoor, for example. The NW (gNB) has a reference KPI table for each scenario when another condition is fixed. Specifically, a table of top-K/1 (%) (option 2) for each scenario can be obtained from learning data.

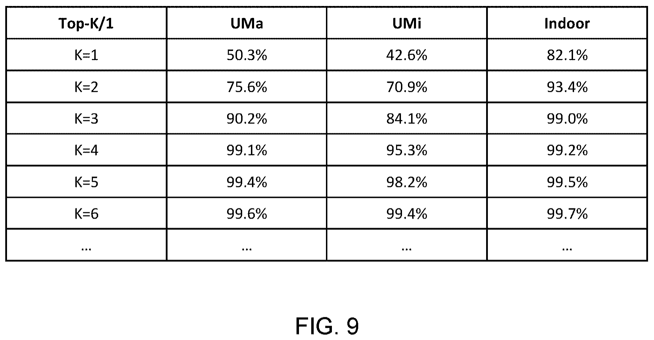

FIG. 9 is a diagram to show an example of top-K/1 (%) for each scenario. For example, when the accuracy of 99% or more is required in option 3, cases below are considered.

Case 0: The UE reports 0 (UMa channel) to the NW (gNB), the NW determines that K is 4. This is because in the table of FIG. 9, the accuracy in a case of UMa is 99% or more when K = 4 or more.
Case 1: The UE reports 1 (UMi) to the NW (gNB), the NW determines that K is 6. This is because in the table of FIG. 9, the accuracy in a case of UMi is 99% or more when K = 6 or more.
Case 2: The UE reports 2 (Indoor) to the NW (gNB), the NW determines that K is 3. This is because in the table of FIG. 9, the accuracy in a case of Indoor is 99% or more when K = 3 or more.

<Embodiment 2-2>

Embodiment 2-2 describes a method for the UE to determine K. The UE may request, from the NW, information related to performance monitoring of the AI/ML model, and may receive the information. The UE may determine K, based on the received information, and may transmit the determined K to the NW. As the method of determining K, the same method as the determination method in the NW of Embodiment 2-1 may be applied.
Note that set B is beams/RSs corresponding to input information (various measured values) to the AI/ML model used for CSI prediction/beam prediction, and is used to derive a predicted value. Set A is beams/RSs corresponding to output information (predicted value) from the AI/ML model, and beam quality of the beam is predicted/reported. The beam prediction may be beam quality prediction. Set A/B may be, for example, a narrow beam or a wide beam.

{Option 1}

The UE may request, from the NW, at least one piece of information below as configurations of set B and set A, and may receive the requested information.

- Size of set B
- Size of set A
- Beam width of set B
- Beam width of set A
- Ratio between size of set B and size of set A
- Any combination of pieces of information above

{Option 2}

The UE may request, from the NW, at least one piece of information below as a time configuration for beam management, and may receive the requested information.

- Time instance associated with set B
- Number of time instances associated with set B

- Number of time instances associated with set A
- Number of time instances associated with set A
- Any combination of pieces of information above

{Option 3}

The UE may request a previous beam monitoring result from the NW, and may receive the requested result.

{Option 4}

The UE may request channel type information, and may receive the requested information.

{Option 5}

The UE may request, from the NW, at least one piece of information below as assistant KPI information, and may receive the requested information. The UE may determine K such that these values become higher/lower.

- An average of L1-RSRP differences from the top-1 predicted beam
- Beam prediction accuracy (%) for top-1/top-K beam
- A CDF of an L1-RSRP difference from the top-1 predicted beam
- Beam prediction accuracy (%) with consideration of a 1 dB margin for the top-1 beam
- UE throughput
- Reduced RS overhead
- Reduced latency
- Reduced power consumption

{Option 6}

The UE may request, from the NW, information related to a performance requirement (for example, the top-K/1 accuracy (%)), and may receive the requested information. The UE may determine K to satisfy this performance.

{Option 7}

The UE may request preset performance information (for example, the table of FIG. 9), and may receive the requested information.

{Option 8}

The UE may request, from the NW, information based on any combination of options 1 to 7 above, and may receive the requested information.

<Embodiment 2-3>

The NW may determine K, and may notify the UE of this K. The UE may measure RSs/beams (set A) corresponding to the top-K predicted beams, based on a configured resource, and may report real measured values to the NW. For a method for the determination of K by the NW, Embodiment 2-1 may be applied.

{Option 1}

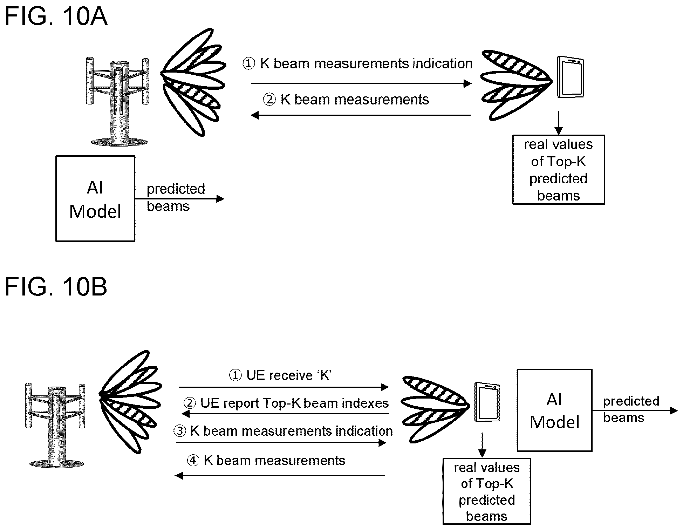

FIG. 10A is a diagram to show an example of option 1 of Embodiment 2-3. Option 1 is an example in which the NW includes an AI model. The NW performs beam prediction for transmit beams by using the AI model, and determines K. Then, the NW indicates K beam measurements to the UE. Then, the UE measures RSs/beams corresponding to the top-K beam predictions, and reports real measured values to the NW. This enables the NW to evaluate the performance of the AI model by comparing a measured value based on beam prediction with a real measured value.

{Option 2}

FIG. 10B is a diagram to show an example of option 2 of Embodiment 2-3. Option 1 is an example in which the UE includes an AI model. The NW determines K, and notifies the UE of this K. The UE performs beam prediction, and transmits the top-K beam indexes to the NW. Then, the NW indicates K beam measurements to the UE. Then, the UE measures RSs/beams corresponding to the top-K beam predictions, and reports real measured values to the NW. This enables the UE to evaluate the performance of the AI model by comparing a measured value based on beam prediction with a real measured value.

<Embodiment 2-4>

The UE may determine K, and may notify the NW of this K. The UE may measure RSs/beams corresponding to the top-K predicted beams, based on a configured resource, and may report real measured values to the NW. For a method for the determination of K by the UE, Embodiment 2-2 may be applied.

[Option 1]

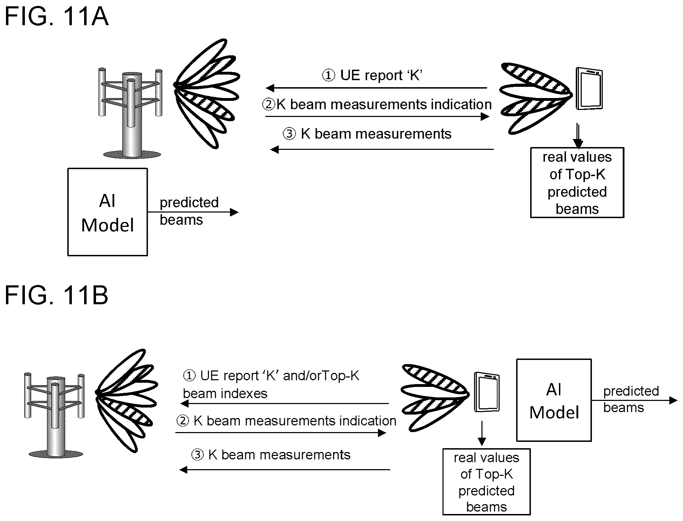

FIG. 11A is a diagram to show an example of option 1 of Embodiment 2-4. Option 1 is an example in which the NW includes an AI model. The UE determines K, and notifies the NW of this K and requests the top-K beam predictions from the NW. The NW performs beam prediction for transmit beams by using the AI model. Then, the NW indicates K beam measurements to the UE. Then, the UE measures RSs/beams corresponding to the top-K beam predictions, and reports real measured values to the NW. This enables the NW to evaluate the performance of the AI model by comparing a measured value based on beam prediction with a real measured value.

[Option 2]

FIG. 11B is a diagram to show an example of option 2 of Embodiment 2-4. Option 2 is an example in which the UE includes an AI model. The UE determines K, and notifies the NW of this K and requests the top-K beam predictions from the NW. Furthermore, the UE performs beam prediction, and transmits the top-K beam indexes/predicted values to the NW. The UE may simultaneously transmit the K value and the K beam indexes to the NW. Then, the NW indicates K beam measurements to the UE. Then, the UE measures RSs/beams corresponding to the top-K beam predictions, and reports real measured values to the NW. This enables the UE to evaluate the performance of the AI model by comparing a measured value based on beam prediction with a real measured value.
In option 2, the examples of embodiments 1-2-2 above may be applied in combination.

<Embodiment 2-5>

The UE may perform beam prediction by using an AI/ML model, and may transmit, to the NW, predicted values of the top-K beam predictions and their respective corresponding real measured values. The NW may monitor/evaluate the performance of the AI/ML model, based on the predicted values and the measured values of the predicted beams.

<Embodiment 2-6>

The UE may report, to the NW, information related to a method for performance monitoring of an AI/ML model (performance monitoring method). The NW may perform, based on the information, performance monitoring/evaluation of the AI/ML model.

{Option 1}

The UE may report, to the NW, information related to a performance monitoring method. The UE may report, to the NW, at least one piece of information of types below, for example.
When type 1 (distance-based monitoring method, for example, L1-RSRP difference) is applied, the UE reports at least one of options 1-1 to 1-4 below.

Option 1-1: Differences between K measured L1-RSRPs and top-K predicted L1-RSRPs (for example, LO-norm, L1-norm, and L2-norm)
Option 1-2: Differences between K measured L1-RSRPs and weighted top-K predicted L1-RSRPs (for example, LO-norm, L1-norm, and L2-norm)
Option 1-3: A difference between an average/sum of K measured L1-RSRPs and an average/sum of top-K predicted L1-RSRPs
Option 1-4: A difference between an average/sum of K L1-RSRP measurement values in a group and an average/sum of top-K predicted L1-RSRPs in the group

Information indicating the group in option 1-4 may be transmitted beforehand from the NW to the UE via higher layer signaling/physical layer signaling. The group may be a group of RSs/beams from a serving cell/additional cell (cell with an Additional PCI).

Type 2 indicates a monitoring method based on accuracy (for example, beam accuracy). When type 2 is applied, the UE may report option 1-5 below.

Option 1-5: Accuracy (%) of the top-1/top-M beams based on K measured beams and predicted beams Note that the accuracy (%) of the top-M beams is a percentage indicating whether the top-M beams among the K measured beams correspond to beams predicted as the top-M beams. M is K or less.

The UE may report, to the NW, accuracy indicating whether the top-K measured beams correspond to beams predicted as the top-K beams.

When type 3 (AI-based method, such as using a neural network to compute a KPI) is applied, the UE may report, to the NW, an index associated with an AI model used for beam performance calculation for performance monitoring.

For types 1 to 3, the association between options 1-1 to 1-5 and the respective monitoring methods is an example. In the present disclosure, the information reported by the UE is not limited to the options above.

Option 2: To assist the determination by the NW, the UE may report, to the NW, a performance requirement for the determination.

Option 3: Any combination of options 1 to 2 above may be applied.

<<Example of Option 1-5>>

An example of option 1-5 will be described. When the predicted beams are [0.3, 0.2, 0.6, 0.4, 0.32, 0.14], M = 2, the top-2 predicted beams are (0.6, 0.4), and measured beam indexes corresponding to the top-2 predicted beams are (0.53, 0.62), accuracy (%) of the top-2 beams = 100%.

<<Example of Type 1>>

An example of type 1 (distance-based) will be described. When predicted values of the top-K predicted beams are $m_1, m_2, ..., m_k$, and real measured values corresponding to the top-K predicted beams are $m'_1, m'_2, ..., m'_k$, a difference (L2 difference) is $1/K\Sigma^K_{i=1}(m_i-m'_i)^2$.

<<Example of Type 2>>

When type 2 is applied, for example, predicted values of the top-K predicted beams are $m_1, m_2, ..., m_k$, and real measured values corresponding to the top-K predicted beams are $m'_1, m'_2, ..., m'_k$. Note that the number of beams is changed from the size of set A to "K."

<<Example of Type 3>>

When type 3 is applied, for example, predicted values of the top-K predicted beams are $m_1, m_2, ..., m_k$, and real measured values corresponding to the top-K predicted beams are $m'_1, m'_2, ..., m'_k$. Note that the number of beams is changed from the size of set A to "K."

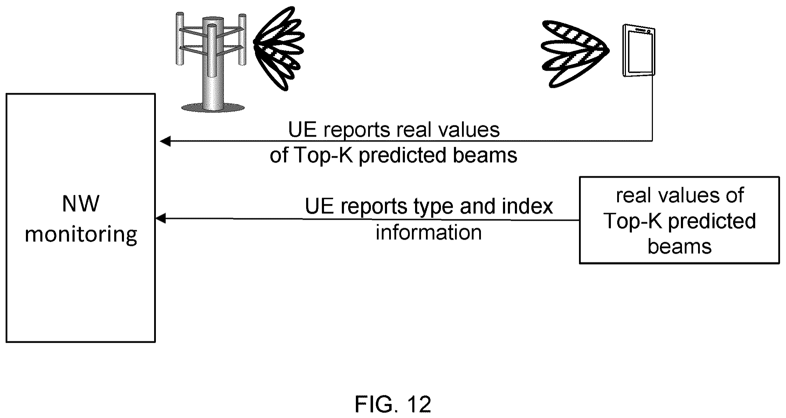

FIG. 12 is a diagram to show an example of an outline of NW monitoring of Embodiments 2-5 and 2-6. The UE performs beam prediction by using the AI/ML model, and reports real measured values (real values) corresponding to the top-K beam predictions (Embodiment 2-5). The UE may report, to the NW, information (for example, a type and an index) related to performance monitoring of the AI/ML model (Embodiment 2-6).

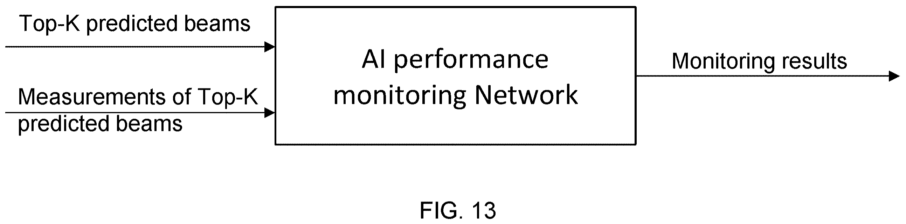

FIG. 13 is a diagram to show an example of the AI performance monitoring at the NW. The NW inputs, to an AI performance monitoring network, predicted values in the top-K beam predictions and real measured values corresponding to the predicted values. Then, the AI performance monitoring network outputs a monitoring result.

<Embodiment 2-7>

The UE may request, from the NW, information related to a method for performance monitoring of the AI/ML model, and may receive the information from the NW. The UE may perform, based on the received information, performance monitoring of the AI/ML model/performance monitoring.

{Option 1}

The UE may request, from the NW, information related to performance monitoring of the AI/ML model, and may receive the information from the NW. The UE may request, from the NW, at least one piece of information of types below, and may receive the information, for example.

When Type 1 (distance-based monitoring method, for example, L1-RSRP difference) is applied, the UE receives at least one of options 1-1 to 1-4 below.

Option 1-1: Differences between K actual L1-RSRPs and top-K predicted L1-RSRPs (for example, LO-norm, L1-norm, and L2-norm)

Option 1-2: Differences between K actual L1-RSRPs and weighted top-K predicted L1-RSRPs (for example, LO-norm, L1-norm, and L2-norm) The UE may receive a parameter related to the weight from the NW.

Option 1-3: A difference between an average/sum of M measured L1-RSRPs and an average/sum of top-M predicted L1-RSRPs

Option 1-4: A difference between an average/sum of M L1-RSRP measurement values in a group and an average/sum of top-M predicted L1-RSRPs in the group

Information indicating the group in option 1-4 may be transmitted beforehand from the NW to the UE via higher layer signaling/physical layer signaling. The group may be a group of RSs/beams from a serving cell/additional cell (cell with an Additional PCI).

Type 2 indicates a monitoring method based on accuracy (for example, beam accuracy). When type 2 is applied, the UE may receive option 1-5 below.

Option 1-5: The UE may report, to the NW, accuracy indicating whether the top-K measured beams correspond to beams predicted as the top-K beams.

When type 3 (AI-based method, such as using a neural network to compute a KPI) is applied, the UE may receive, from the NW, an index associated with an AI model used for beam performance calculation for performance monitoring. The UE may receive the AI model (AI performance monitoring model) from the NW.

For types 1 to 3, the association between options 1-1 to 1-5 and the respective monitoring methods is an example. In the present disclosure, the information received by the UE is not limited to the index above.

Option 2: The UE requests, from the NW, a performance requirement determined by the NW, and receives the performance requirement. The UE may use the received performance requirement for determining an AI/ML model to be used and determining a performance monitoring method.

Option 3: Any combination of options 1 to 2 above may be applied.

<Embodiment 2-8>

The UE may perform performance monitoring/evaluation of the AI/ML model, based on requested/received information or a specification, and may perform calculation using a metric for the performance monitoring/evaluation.

<Embodiment 2-9>

The UE may request a performance determination strategy for the AI/ML model from the NW, and may receive the performance determination strategy.

<Embodiment 2-10>

The UE may determine whether a monitored performance of the AI/ML model meets a performance requirement, based on the monitored performance and a performance determination strategy (for example, the performance determination strategy received in Embodiment 2-9).

<Embodiment 2-11>

The UE may report a performance monitoring result to the NW. For example, options 1 to 3 below may be applied.

Option 1: The UE may report a value of a monitoring performance. The value of the monitoring performance may be, for example, at least one of a value related to distance, a value related to accuracy, and a value related to AI monitoring.

Option 2: The UE may report a result of whether the monitoring performance meets a performance requirement.

Option 3: Options 1 and 2 may be applied in combination.

<Monitoring by UE>

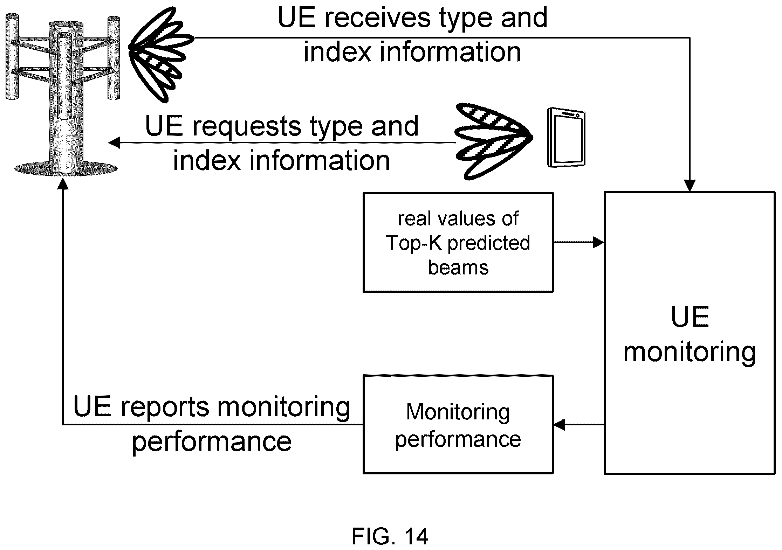

FIG. 14 is a diagram to show an example of the performance monitoring at the UE. At least part of the example of FIG. 14 may be applied to Embodiments 2-7 to 2-11. The UE may request, from the NW, information related to performance monitoring of the AI/ML model, and may receive the information from the NW (for example, Embodiment 2-7). The UE performs beam prediction by using the AI/ML model. The UE measures beams corresponding to the top-K predicted beams to obtain real measured values. The UE performs performance monitoring of the AI/ML model by using the information related to the performance monitoring received from the NW, and the like, and reports a result of the monitoring (performance) to the NW.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in an existing standard being included in a MAC subheader.
When the notification is performed by DCI, the notification may be performed by a specific field of the DCI, a radio network temporary identifier (RNTI) used for scrambling of cyclic redundancy check (CRC) bits given to the DCI, a format of the DCI, or the like.
Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.
When the notification is performed by a MAC CE, the MAC CE may be identified by a new LCID not defined in existing standards being included in a MAC subheader.
When the notification is performed by UCI, the notification may be transmitted by using a PUCCH or a PUSCH.
Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.
At least one of the above-described embodiments may be applied only to a UE that has reported a specific UE capability or that supports the specific UE capability. Note that "supporting" and "whether to support" may be interchangeably interpreted.
The specific UE capability may indicate at least one of the following:

- supporting of specific processing/operation/control/information for at least one of the embodiments above
- a maximum value of a prediction time offset
- values of K and X
- supporting of CSI prediction/beam prediction using an AI/ML model
- supporting of performance monitoring of an AI/ML model
- supporting of determination of K
- a maximum value of a prediction time offset
- sensing of a channel/scenario type

- supporting of detection of a dataset ID

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Note)

Regarding one embodiment of the present disclosure, the following supplementary notes of the invention will be given.

{Supplementary Note 1}

A terminal including:

a control section that calculates a performance of a prediction of Channel State Information (CSI) corresponding to one or more prediction time offsets, each prediction time offset being a time difference between a prediction timing of the CSI and a measurement timing of the CSI or a reporting timing of a predicted value of the CSI; and
a transmitting section that transmits the performance of the prediction of the CSI.

{Supplementary Note 2}

The terminal according to supplementary note 1, further including a receiving section that receives a configuration related to a specific prediction time offset, wherein
the control section calculates a performance of a prediction of the CSI corresponding to the specific prediction time offset.

{Supplementary Note 3}

The terminal according to supplementary note 1 or 2, wherein
the transmitting section transmits a performance of a prediction of the CSI corresponding to a part of the prediction time offsets as a differential value from a performance of a prediction of the CSI corresponding to another of the prediction time offsets.

{Supplementary Note 4}

The terminal according to any one of supplementary notes 1 to 3, wherein

the control section calculates an average value of performances of predictions of the CSI corresponding to a plurality of the prediction time offsets, and
the transmitting section transmits the average value.

(Supplementary Note)

Regarding one embodiment of the present disclosure, the following supplementary notes of the invention will further be given.

{Supplementary Note 1}

A terminal including:

a control section that predicts a certain number of higher ranked beams with larger Reference Signal Received Power (RSRP) or Signal to Interference plus Noise Ratio (SINR); and
a transmitting section that transmits a performance of a prediction of at least one beam among the certain number of predicted higher ranked beams.

{Supplementary Note 2}

The terminal according to supplementary note 1, wherein
the transmitting section transmits a performance of a prediction of a part of the beams as a differential value from a performance of a prediction of another of the beams.

{Supplementary Note 3}

The terminal according to supplementary note 1 or 2, wherein
the transmitting section transmits a predicted value of a specific number of beam measurements, based on the performance of the prediction of the beam.

{Supplementary Note 4}

The terminal according to any one of supplementary notes 1 to 3, wherein
when a performance of a prediction of a specific number of beams is greater than a threshold value, the transmitting section transmits a predicted value of a beam measurement of the specific number.

(Supplementary Note)

Regarding one embodiment of the present disclosure, the following supplementary notes of the invention will further be given.

{Supplementary Note 1}

A terminal including:

a control section that performs monitoring of a performance of a model, a functionality, or a fallback operation used for Channel State Information (CSI) prediction or model prediction; and
a transmitting section that transmits a result of the monitoring.

{Supplementary Note 2}

The terminal according to supplementary note 1, wherein
the transmitting section transmits, as the result of the monitoring, the model, the functionality, or the fallback operation that achieves a highest or lowest performance monitoring metric in the monitoring.

{Supplementary Note 3}

The terminal according to supplementary note 1 or 2, wherein
the transmitting section transmits, as the result of the monitoring, a performance difference between a specific model, a specific functionality, or a specific fallback operation and another model, another functionality, or another fallback operation.

{Supplementary Note 4}

The terminal according to any one of supplementary notes 1 to 3, wherein
the monitoring result includes at least one of throughput, Reference Signal Received Power (RSRP), a Signal to Interference plus Noise Ratio (SINR), a Block Error Rate (BLER), and a retransmission response in a case where the model, the functionality, or the fallback operation is applied.

(Supplementary Note)

Regarding one embodiment of the present disclosure, the following supplementary notes of the invention will further be given.

{Supplementary Note 1}

A terminal including:

a control section that, when performance monitoring of an AI/ML model is performed based on a certain number of higher ranked beams predicted by the AI/ML model, determines the certain number; and
a transmitting section that transmits the certain number.

{Supplementary Note 2}

The terminal according to supplementary note 1, wherein

the control section measures beams corresponding to the predicted beams, based on a configured resource, and
the transmitting section transmits measured values.

{Supplementary Note 3}

The terminal according to supplementary note 1 or 2, further including a receiving section that receives information related to a method for performance monitoring of the AI/ML model, wherein
the control section performs, based on the received information, performance monitoring of the AI/ML model.

{Supplementary Note 4}

The terminal according to any one of supplementary notes 1 to 3, further including a receiving section that receives a performance determination strategy for the AI/ML model, wherein
the control section determines whether a performance of the AI/ML model meets a performance requirement, based on the performance determination strategy and the monitored performance.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

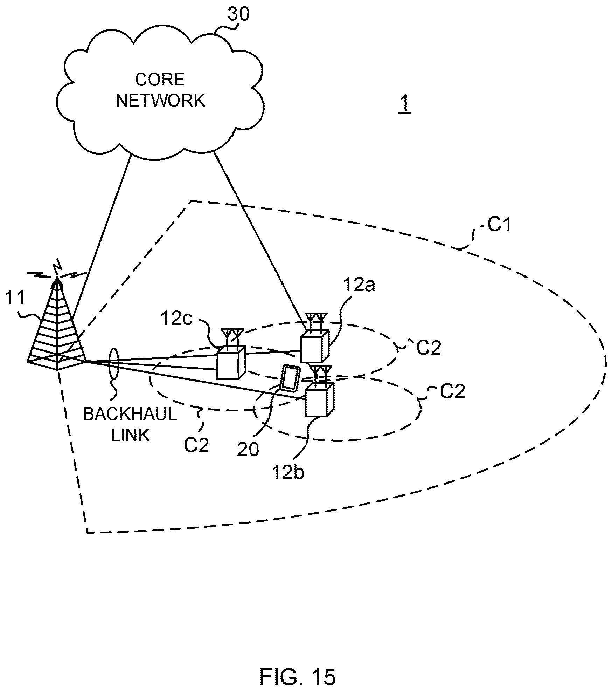

FIG. 15 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.
In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.
The radio communication system 1 may support dual connectivity between a plurality of base stations in the same RAT (for example, dual connectivity (NR-NR Dual Connectivity (NN-DC)) where both of an MN and an SN are base stations (gNB) of NR).
The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

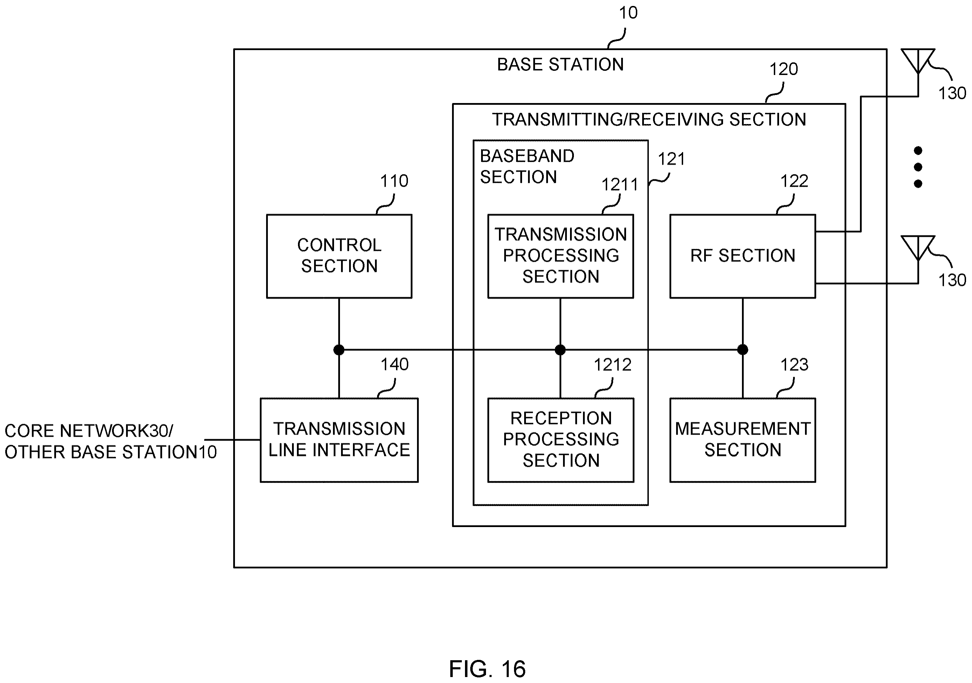

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may indicate, to a terminal, calculation of a performance of a prediction of Channel State Information (CSI) corresponding to one or more prediction time offsets. The prediction time offset may be a time difference between a prediction timing of the CSI and a measurement timing of the CSI or a reporting timing of a predicted value of the CSI.

The transmitting/receiving section 120 may receive the performance of the prediction of the CSI.

The control section 110 may indicate, to a terminal, prediction of a certain number of higher ranked beams with larger Reference Signal Received Power (RSRP) or Signal to Interference plus Noise Ratio (SINR).

The transmitting/receiving section 120 may receive a performance of a prediction of at least one beam among the certain number of predicted higher ranked beams.

The control section 110 may indicate, to a terminal, monitoring of a performance of a model, a functionality, or a fallback operation used for Channel State Information (CSI) prediction or model prediction.

The transmitting/receiving section 120 may receive a result of the monitoring.

The control section 110 may, when performance monitoring of an Artificial Intelligence (AI)/Machine Learning (ML) model is performed based on a certain number of higher ranked beams predicted by the AI/ML model, determine the certain number.

The transmitting/receiving section 120 may transmit the certain number.

(User Terminal)

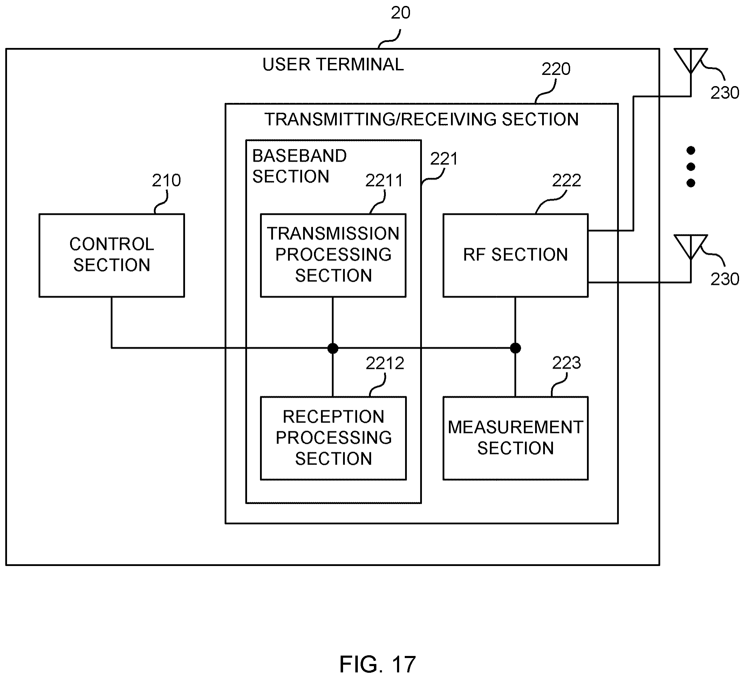

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may calculate a performance of a prediction of Channel State Information (CSI) corresponding to one or more prediction time offsets. The prediction time offset may be a time difference between a prediction timing of the CSI and a measurement timing of the CSI or a reporting timing of a predicted value of the CSI.

The transmitting/receiving section 220 may transmit the performance of the prediction of the CSI.

The transmitting/receiving section 220 may receive a configuration related to a specific prediction time offset. The control section 210 may calculate a performance of a prediction of the CSI corresponding to the specific prediction time offset.

The transmitting/receiving section 220 may transmit a performance of a prediction of the CSI corresponding to a part of the prediction time offsets as a differential value from a performance of a prediction of the CSI corresponding to another of the prediction time offsets.

The control section 210 may calculate an average value of performances of predictions of the CSI corresponding to a plurality of the prediction time offsets. The transmitting/receiving section 220 may transmit the average value.

The control section 210 may predict a certain number of higher ranked beams with larger Reference Signal Received Power (RSRP) or Signal to Interference plus Noise Ratio (SINR).

The transmitting/receiving section 220 may transmit a performance of a prediction of at least one beam among the certain number of predicted higher ranked beams.

The transmitting/receiving section 220 may transmit a performance of a prediction of a part of the beams as a differential value from a performance of a prediction of another of the beams.

The transmitting/receiving section 220 may transmit a predicted value of a specific number of beam measurements, based on the performance of the prediction of the beam.

The transmitting/receiving section 220 may, when a performance of a prediction of a specific number of beams is greater than a threshold value, transmit a predicted value of a beam measurement of the specific number.

The control section 210 may perform monitoring of a performance of a model, a functionality, or a fallback operation used for Channel State Information (CSI) prediction or model prediction.

The transmitting/receiving section 220 may transmit a result of the monitoring.

The transmitting/receiving section 220 may transmit, as the result of the monitoring, the model, the functionality, or the fallback operation that achieves a highest or lowest performance monitoring metric in the monitoring.

The transmitting/receiving section 220 may transmit, as the result of the monitoring, a performance difference between a specific model, a specific functionality, or a specific fallback operation and another model, another functionality, or another fallback operation.

The monitoring result may include at least one of throughput, Reference Signal Received Power (RSRP), a Signal to Interference plus Noise Ratio (SINR), a Block Error Rate (BLER), and a retransmission response in a case where the model, the functionality, or the fallback operation is applied.

The control section 210 may, when performance monitoring of an Artificial Intelligence (AI)/Machine Learning (ML) model is performed based on a certain number of higher ranked beams predicted by the AI/ML model, determine the certain number.

The transmitting/receiving section 220 may transmit the certain number.

The control section 210 may measure beams corresponding to the predicted beams, based on a configured resource. The transmitting/receiving section 220 may transmit measured values.

The transmitting/receiving section 220 may transmit measured values.

The transmitting/receiving section 220 may receive information related to a method for performance monitoring of the AI/ML model. The control section 210 may perform, based on the received information, performance monitoring of the AI/ML model.

The transmitting/receiving section 220 may receive a performance determination strategy for the AI/ML model. The control section 210 may determine whether a performance of the AI/ML model meets a performance requirement, based on the performance determination strategy and the monitored performance.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

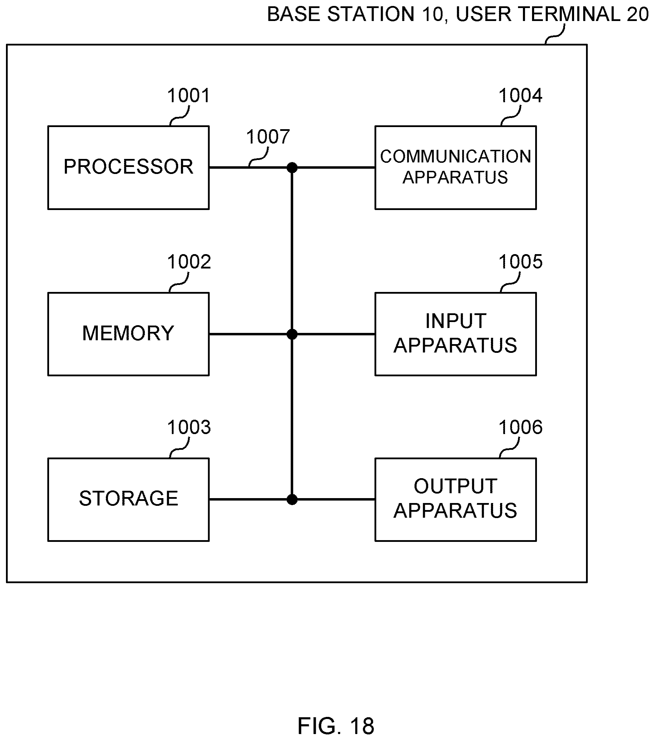

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

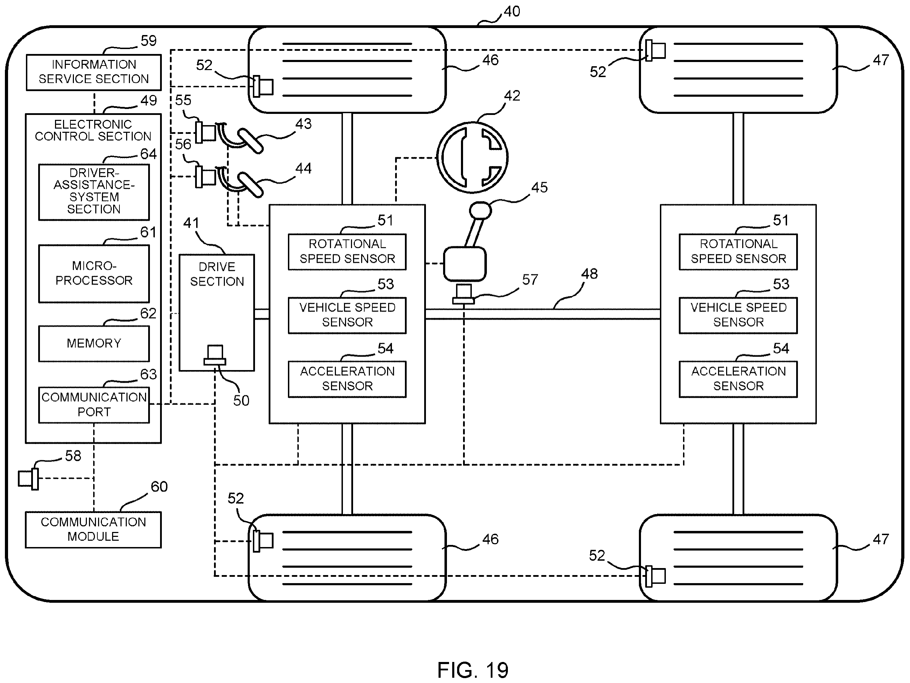

FIG. 19 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

   a control section that, when performance monitoring of an Artificial Intelligence (AI)/Machine Learning (ML) model is performed based on a certain number of higher ranked beams predicted by the AI/ML model, determines the certain number; and
   a transmitting section that transmits the certain number.

2. The terminal according to claim 1, wherein

   the control section measures beams corresponding to the predicted beams, based on a configured resource, and
   the transmitting section transmits measured values.

3. The terminal according to claim 1, further comprising

   a receiving section that receives information related to a method for performance monitoring of the AI/ML model, wherein
   the control section performs, based on the received information, performance monitoring of the AI/ML model.

4. The terminal according to claim 1, further comprising

   a receiving section that receives a performance determination strategy for the AI/ML model, wherein
   the control section determines whether a performance of the AI/ML model meets a performance requirement, based on the performance determination strategy and the monitored performance.

5. A radio communication method for a terminal, the radio communication method comprising:

   determining, when performance monitoring of an Artificial Intelligence (AI)/Machine Learning (ML) model is performed based on a certain number of higher ranked beams predicted by the AI/ML model, the certain number; and
   transmitting the certain number.

6. A base station comprising:

   a control section that, when performance monitoring of an Artificial Intelligence (AI)/Machine Learning (ML) model is performed based on a certain number of higher ranked beams predicted by the AI/ML model, determines the certain number; and
   a transmitting section that transmits the certain number.

FIG. 1

EP 4 746 484 A1

FIG. 2

EP 4 746 484 A1

EP 4 746 484 A1

```
┌──────────────┐     ┌ ─ ─ ─ ─ ─ ─ ┐     ┌ ─ ─ ─ ─ ─ ─ ┐     ┌ ─ ─ ─ ─ ─ ─ ┐     ┌ ─ ─ ─ ─ ─ ─ ┐     ┌──────────────┐
│ Performance  │     │   Model     │     │ Performance │     │   Model     │     │   Model     │     │    Model     │
│ monitoring   │ ──► │evaluation at│ ──► │ reporting   │ ──► │evaluation at│ ──► │  request    │ ──► │ activation/  │
│              │     │    UE       │     │             │     │    NW       │     │             │     │ deactivation │
└──────────────┘     └ ─ ─ ─ ─ ─ ─ ┘     └ ─ ─ ─ ─ ─ ─ ┘     └ ─ ─ ─ ─ ─ ─ ┘     └ ─ ─ ─ ─ ─ ─ ┘     └──────────────┘
      ▲                                                                                                      │
      └──────────────────────────────────────────────────────────────────────────────────────────────────┘
```

FIG. 3

FIG. 4

# FIG. 5A

Sparse Beam
Measurements

→ AI Model →

Beam Quality
with Dense Beams

EP 4 746 484 A1

# FIG. 5B

Historical Beam Measurements

→ AI Model →

TIME

Beam Quality in Future

TIME

| CSI measurement t=0 | CSI measurement t=1 | CSI measurement t=2 | Prediction | predicted CSI t=3 | predicted CSI t=4 | predicted CSI t=5 |
| --- | --- | --- | --- | --- | --- | --- |

Prediction time offset

FIG. 6

EP 4 746 484 A1

NW(BS)    UE

CSI-RS

Estimate the performance
based on the outputs of AI
models and channel
measurement

Performance
report

FIG. 7

FIG. 8

| Top-K/1 | UMa | UMi | Indoor |
|---------|-----|-----|--------|
| K=1 | 50.3% | 42.6% | 82.1% |
| K=2 | 75.6% | 70.9% | 93.4% |
| K=3 | 90.2% | 84.1% | 99.0% |
| K=4 | 99.1% | 95.3% | 99.2% |
| K=5 | 99.4% | 98.2% | 99.5% |
| K=6 | 99.6% | 99.4% | 99.7% |
| ... | ... | ... | ... |

FIG. 9

## FIG. 10A

① K beam measurements indication

② K beam measurements

AI Model — predicted beams

real values of Top-K predicted beams

## FIG. 10B

① UE receive 'K'

② UE report Top-K beam indexes

③ K beam measurements indication

④ K beam measurements

AI Model — predicted beams

real values of Top-K predicted beams

## FIG. 11A

① UE report 'K'

②K beam measurements indication

③ K beam measurements

AI Model — predicted beams

real values of Top-K predicted beams

## FIG. 11B

① UE report 'K' and/orTop-K beam indexes

② K beam measurements indication

③ K beam measurements

AI Model — predicted beams

real values of Top-K predicted beams

FIG. 12

EP 4 746 484 A1

| Top-K predicted beams | AI performance monitoring Network | Monitoring results |
|---|---|---|

Measurements of Top-K predicted beams →

**FIG. 13**

UE receives type and index information

UE requests type and index information

real values of Top-K predicted beams

UE monitoring

UE reports monitoring performance

Monitoring performance

FIG. 14

EP 4 746 484 A1

FIG. 15

FIG. 16

EP 4 746 484 A1

FIG. 17

BASE STATION 10, USER TERMINAL 20

| | | |
|---|---|---|
| **1001** PROCESSOR | **1007** | **1004** COMMUNICATION APPARATUS |
| **1002** MEMORY | | **1005** INPUT APPARATUS |
| **1003** STORAGE | | **1006** OUTPUT APPARATUS |

FIG. 18

FIG. 19

## INTERNATIONAL SEARCH REPORT

| International application No. |
|---|
| **PCT/JP2023/025636** |

**A. CLASSIFICATION OF SUBJECT MATTER**

*H04W 16/28*(2009.01)i; *H04W 24/02*(2009.01)i
FI: H04W16/28; H04W24/02

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | MediaTek Inc., Other aspect on AI/ML for beam management, 3GPP TSG RAN WG1 #113 R1-2305658, 26 May 2023<br>particularly, sections 2.3.2, 2.4 | 1-3, 5-6 |
| Y | | 4 |
| Y | Nokia, Nokia Shanghai Bell, AI/ML Control and other topics, 3GPP TSG RAN WG2 #122 R2-2305148, 26 May 2023<br>particularly, section 2.1.3 | 4 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 January 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010